(19) Europäisches Patentamt
European Patent Office
Office européen des brevets

(11) **EP 2 993 901 A1**

(12) **EUROPEAN PATENT APPLICATION**

(43) Date of publication:
**09.03.2016 Bulletin 2016/10**

(51) Int Cl.:
**H04N 13/02** (2006.01)  **H04N 13/00** (2006.01)

(21) Application number: **15183747.3**

(22) Date of filing: **03.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.09.2014 IN CH42892014**
**03.09.2014 KR 20140117316**

(71) Applicant: **Samsung Electronics Co., Ltd.**
**Gyeonggi-do 16677 (KR)**

(72) Inventors:
- **YIM, Jong-Hwa**
  **Gyeonggi-do (KR)**
- **LEE, Shin-Jun**
  **Gyeonggi-do (KR)**
- **CAMILUS, K Santle**
  **629003 Nagercoil (IN)**

- **BAJPAI, Pankaj Kumar**
  **211001 Up (IN)**
- **MOHAN, Patil Mahesh**
  **591307 Karnataka (IN)**
- **YADAV, Sourabh Singh**
  **451001 Khargone, Mp, (IN)**
- **KIM, Hyung-Suk**
  **Gyeonggi-do (KR)**
- **LEE, Jung-Eun**
  **Gyeonggi-do (KR)**
- **CHO, Sung-Dae**
  **Gyeonggi-do (KR)**
- **JAYAKARTHICK, S**
  **638401 Tamilnadu (IN)**
- **RANIPA, Keyur Ruganathbhai**
  **361006 Gujarat (IN)**

(74) Representative: **Jenkins, Richard Gavin**
**HGF Limited**
**Saviour House**
**9 St Saviourgate**
**York YO1 8NQ (GB)**

(54) **METHOD FOR DISPLAYING IMAGES AND ELECTRONIC DEVICE THEREOF**

(57)    An apparatus and a method for displaying images in an electronic device are provided. The electronic device includes a processor that obtains an image and a depth map corresponding to the image, separates the image into one or more areas based on the depth map of the image, applies an effect, which is different from at least one of other areas, to at least one of the areas separated from the image, and connects the areas, to which the different effects have been applied, as a single image, and a display that displays the single image.

FIG.3

**Description**

## TECHNICAL FIELD

The present disclosure relates to an apparatus and a method for displaying images in an electronic device.

## BACKGROUND

With the development of information communication technology and semiconductor technology, various electronic devices have been developed into multimedia devices that provide various multimedia services. For example, the portable electronic device may provide various multimedia services, such as broadcast services, wireless Internet services, camera services, and music playing services.

The electronic device may display an image in three dimensions in order to provide a user with factual information. For example, the electronic device may three-dimensionally display at least one object included in the image, using a depth map of the image. Here, the depth map may represent information on the distance from a user's view point to the surface of the object.

The above information is presented as background information only to assist with an understanding of the present disclosure. No determination has been made, and no assertion is made, as to whether any of the above might be applicable as prior art with regard to the present disclosure.

## SUMMARY

When displaying an image in three dimensions in the electronic device, in order to provide the perspective for each object contained in the image, the electronic device may display the corresponding object to be separated from the background. The image, which is three-dimensionally displayed on a display of the electronic device, may include a hole due to the object separated to be displayed in three dimensions i.e. there is a hole area in the background image (behind the object), where the object would be positioned if the image were being displayed in two dimensions, resulting from the separation of the object from the background for displaying the image in three dimensions. Accordingly, the electronic device requires a method for providing a natural three-dimensional effect.

Aspects of the present disclosure are to address at least the above-mentioned problems and/or disadvantages and to provide at least the advantages described below. Accordingly, an aspect of the present disclosure is to provide an apparatus and method for displaying images in three dimensions in the electronic device.

In accordance with an aspect of the present disclosure, an electronic device is provided. The electronic device includes at least one image sensor, a memory, a communication interface, a processor configured to obtain an image and a depth map corresponding to the image, to separate i.e. divide the image into one or more areas based on the depth map of the image, to apply an effect, which is different from at least one of other areas, to at least one of the areas separated from the image, and to connect i.e. combine the areas, to which the different effects have been applied, as a single image, and a display configured to display the single image.

In some embodiments of the present disclosure, applying different effects to areas separated from the image includes applying an effect to a first area and not applying an effect to a second area. For example, an image may be separated into first and second areas with an effect being applied to a first area and no effect being applied to a second area. The first and second areas may then be combined to form the single image.

In accordance with another aspect of the present disclosure, an operating method of an electronic device is provided. The operating method includes obtaining an image, obtaining a depth map corresponding to the image, separating the image into one or more areas based on the depth map of the image, applying an effect, which is different from at least one of other areas, to at least one of the areas separated from the image, and displaying the areas, to which different effects have been applied, on a display.

In accordance with another aspect of the present disclosure, a computer program is provided. The computer program comprises instructions arranged, when executed, to implement a method and/or apparatus in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram of an electronic device according to an embodiment of the present disclosure;

FIG. 2 is a block diagram of a program module according to an embodiment of the present disclosure;

FIG. 3 is a block diagram of a processor according to an embodiment of the present disclosure;

FIGS. 4A, 4B, 4C, 4D, and 4E illustrate the configuration of a screen image to three-dimensionally display an object included in an image using a depth map according to various embodiments of the present disclosure;

FIGS. 5A, 5B, 5C, 5D, and 5E illustrate a three-dimensional disposal structure of an image according to various embodiments of the present disclosure;

FIGS. 6A, 6B, 6C, 6D, and 6E illustrate a two-dimensional disposal structure of an image according to various embodiments of the present disclosure;

FIG. 7 is a flowchart of displaying an image in an electronic device according to an embodiment of the present disclosure;

FIG. 8 is a flowchart to apply a graphic effect based on a view point range in an electronic device according to an embodiment of the present disclosure;

FIG. 9 is a flowchart to apply a graphic effect based on a view point change in an electronic device according to an embodiment of the present disclosure;

FIGS. 10A, 10B, 10C and 10D illustrate the configuration of a screen image to apply a graphic effect to at least a partial area of an image according to various embodiments of the present disclosure;

FIGS. 11A and 11B illustrate the configuration of a screen image to apply a graphic effect to at least a partial area of an image according to various embodiments of the present disclosure;

FIGS. 12A, 12B, and 12C illustrate the configuration of a screen image to apply an animation effect to at least a partial area of an image according to various embodiments of the present disclosure;

FIG. 13 is a flowchart to apply a graphic effect to at least a partial area of an image in an electronic device according to an embodiment of the present disclosure; and

FIG. 14 is a block diagram of an electronic device according to an embodiment of the present disclosure.

Throughout the drawings, like reference numerals will be understood to refer to like parts, components, and structures.


## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms "have", "may have", "include", or "may include" used in the various embodiments of the present disclosure indicate the presence of disclosed corresponding functions, operations, elements, and the like, and do not limit additional one or more functions, operations, elements, and the like. In addition, it should be understood that the terms "include" or "have" used in the various embodiments of the present disclosure are to indicate the presence of features, numbers, operations, elements, parts, or a combination thereof described in the specifications, and do not preclude the presence or addition of one or more other features, numbers, operations, elements, parts, or a combination thereof.

The terms "A or B", "at least one of A or/and B" or "one or more of A or/and B" used in the various embodiments of the present disclosure include any and all combinations of words enumerated with it. For example, "A or B", "at least one of A and B" or "at least one of A or B" means (1) including at least one A, (2) including at least one B, or (3) including both at least one A and at least one B.

Although the term such as "first" and "second" used in various embodiments of the present disclosure may modify various elements of various embodiments, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of various embodiments of the present disclosure, and similarly, a second element may be named a first element.

It will be understood that when an element (e.g., first element) is "connected to" or "(operatively or communicatively) coupled with/to" to another element (e.g., second element), the element may be directly connected or coupled to another element, and there may be an intervening element (e.g., third element) between the element and another element. To the contrary, it will be understood that when an element (e.g., first element) is "directly connected" or "directly coupled" to another element (e.g., second element), there is no intervening element (e.g., third element) between the element and another element.

The expression "configured to (or set to)" used in various embodiments of the present disclosure may be replaced with "suitable for", "having the capacity to", "designed to", " adapted to", "made to", or "capable of" according to a situation. The term "configured to (set to)" does not necessarily mean "specifically designed to" in a hardware level. Instead, the expression "apparatus configured to..." may mean that the apparatus is "capable of..." along with other devices or parts in a certain situation. For example, "a processor configured to (set to) perform A, B, and C" may be a dedicated processor, e.g., an embedded processor, for performing a corresponding operation, or a generic-purpose processor, e.g., a central processing unit (CPU) or an application processor (AP), capable of performing a corresponding operation by executing one or more software programs stored in a memory device.

Further, all the terms used herein, including technical and scientific terms, should be interpreted to have the same meanings as commonly understood by those skilled in the art to which the present disclosure pertains, and should not be interpreted to have ideal or excessively formal meanings unless explicitly defined in various embodiments of the present disclosure.

The module or program module according to various embodiments of the present disclosure may further include at least one or more constitutional elements among the aforementioned constitutional elements, or may omit some of them, or may further include additional other constitutional elements. Operations performed by a module, programming module, or other constitutional elements according to various embodiments of the present disclosure may be executed in a sequential, parallel, repetitive, or heuristic manner. In addition, some of the operations may be executed in a different order or may be omitted, or other operations may be added.

Features, integers, characteristics, compounds, chemical moieties or groups described in conjunction with a particular aspect, embodiment or example of the present disclosure are to be understood to be applicable to any other aspect, embodiment or example described herein unless incompatible therewith.

An electronic device according to various embodiments of the present disclosure may be a device. For example, the electronic device according to various embodiments of the present disclosure may include at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), a Moving Picture Experts Group phase 1 or phase 2 (MPEG-1 or MPEG-2) layer 3 audio (MP3) player, a mobile medical device, a camera, or a wearable device (e.g., a head-mounted device (HMD), an electronic glasses, an electronic clothing, an electronic bracelet, an electronic necklace, an electronic appcessory, an electronic tattoo, a smart mirror, or a smart watch).

In other embodiments of the present disclosure, an electronic device may be a smart home appliance. For example, of such appliances may include at least one of a television (TV), a digital versatile disc (DVD) player, an audio component, a refrigerator, an air conditioner, a vacuum cleaner, an oven, a microwave oven, a washing machine, an air cleaner, a set-top box, a home automation control panel, a security control panel, a TV box (e.g., Samsung HomeSync®, Apple TV®, or Google TV), a game console (e.g., Xbox® PlayStation®), an electronic dictionary, an electronic key, a camcorder, or an electronic frame.

In other embodiments of the present disclosure, an electronic device may include at least one of a medical equipment (e.g., a mobile medical device (e.g., a blood glucose monitoring device, a heart rate monitor, a blood pressure monitoring device or a temperature meter), a magnetic resonance angiography (MRA) machine, a magnetic resonance imaging (MRI) machine, a computed tomography (CT) scanner, or an ultrasound machine), a navigation device, a global positioning system (GPS) receiver, an event data recorder (EDR), a flight data recorder (FDR), an in-vehicle infotainment device, an electronic equipment for a ship (e.g., ship navigation equipment and/or a gyrocompass), an avionics equipment, a security equipment, a head unit for vehicle, an industrial or home robot, an automatic teller's machine (ATM) of a financial institution, point of sale (POS) device at a retail store, or an internet of things device (e.g., a lightbulb, various sensors, an electronic meter, a gas meter, a sprinkler, a fire alarm, a thermostat, a streetlamp, a toaster, a sporting equipment, a hot-water tank, a heater, or a boiler and the like)

In certain embodiments of the present disclosure, an electronic device may include at least one of a piece of furniture or a building/structure, an electronic board, an electronic signature receiving device, a projector, and various measuring instruments (e.g., a water meter, an electricity meter, a gas meter, or a wave meter).

An electronic device according to various embodiments of the present disclosure may also include a combination of one or more of the above-mentioned devices.

Further, it will be apparent to those skilled in the art that an electronic device according to various embodiments of the present disclosure is not limited to the above-mentioned devices.

Herein, the term "user" may indicate a person who uses an electronic device or a device (e.g., an artificial intelligence electronic device) that uses the electronic device.

Hereinafter, the present disclosure may describe technology of displaying an image in an electronic device.

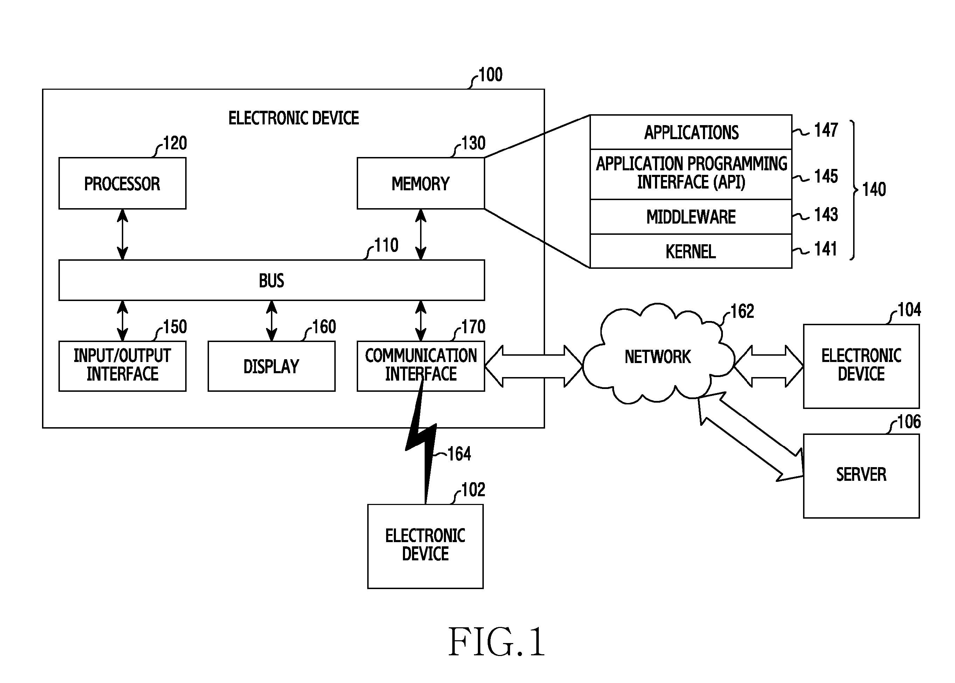

FIG. 1 is a block diagram of an electronic device according to an embodiment of the present disclosure.

Referring to FIG. 1, the electronic device 100 may include a bus 110, a processor 120, a memory 130, an input/output interface 150, a display 160, and a communication interface 170. In an embodiment of the present disclosure, the electronic device 100 may exclude some of the elements, or may further include other elements.

The bus 110 may be a circuit for connecting elements (e.g., the processor 120, the memory 130, the input/output interface 150, the display 160, or the communication interface 170) mentioned above, and transferring communication data (e.g., control messages) between the elements.

The processor 120 may include one or more of a CPU, an AP, or a communication processor (CP). The processor 120, for example, may process calculation or data in relation to the control and/or communication with respect to one or more of other elements of the electronic device 100.

The processor 120 may divide an image into a plurality of areas, based on the depth map of the image. The processor 120 may process the image for each area thereof. For example, the processor 120 separate one or more objects including different depth values from the corresponding image, using the depth map of the image. The processor 120 may perform different image processes with respect to the objects that include different depth values.

According to an embodiment of the present disclosure, the processor 120 may apply a change effect to adjust at least one of sizes or positions of some of the areas separated according to the depth map. For example, the processor 120 may apply a change effect to adjust at least one of sizes or positions of some of the areas separated according to the depth map to correspond to a change in the user's view point.

According to an embodiment of the present disclosure, the processor 120 may apply a graphic effect (e.g., colors, or chroma) to some of the areas separated according to the depth map. For example, the processor 120 may apply an animation effect to some of the areas separated according to the depth map. For example, the processor 120 may apply different graphic effects to the areas separated according to the depth map.

The memory 130 may include a volatile memory and/or a non-volatile memory. The memory 130 may store, for example, instructions or data (e.g. image data) relevant to at least one other element of the electronic device 100. According to an embodiment of the present disclosure, the memory 130 may store a program module 140. The program module 140 may include, for example, a kernel 141, middleware 143, an application programming interface (API) 145, and/or applications (or applications programs) 147. At least some of the kernel 141, the middleware 143, and the API 145 may be referred to as an operating system (OS).

The kernel 141 may control or manage system resources (e.g., the bus 110, the processor 120, or the memory 130) used for performing an operation or function implemented by the other programs (e.g., the middleware 143, the API 145, or the applications 147). Furthermore, the kernel 141 may provide an interface through which the middleware 143, the API 145, or the applications 147 may access the individual elements of the electronic device 100 to control or manage the system resources.

The middleware 143, for example, may function as an intermediary for allowing the API 145 or the applications 147 to communicate with the kernel 141 to exchange data.

In addition, the middleware 143 may process one or more task requests received from the applications 147 according to priorities thereof. For example, the middleware 143 may assign priorities for using the system resources (e.g., the bus 110, the processor 120, the memory 130, or the like) of the electronic device 100, to at least one of the applications 147. For example, the middleware 143 may perform scheduling or load balancing on the one or more task requests by processing the one or more task requests according to the priorities assigned thereto.

The API 145 is an interface through which the applications 147 control functions provided from the kernel 141 or the middleware 143, and may include, for example, at least one interface or function (e.g., instruction) for file control, window control, image processing, or text control.

The input/output interface 150, for example, may function as an interface that may transfer instructions or data input from a user or another external device to the other element(s) of the electronic device 100. Furthermore, the input/output interface 150 may output the instructions or data received from the other element(s) of the electronic device 100 to the user or another external device.

The display 160 may include, for example, a liquid crystal display (LCD), a light emitting diode (LED) display, an organic LED (OLED) display, a micro electro mechanical system (MEMS) display, or an electronic paper display. The display 160, for example, may display various types of content (e.g., text, images, videos, icons, or symbols) for the user. The display 160 may include a touch screen and receive, for example, a touch, gesture, proximity, or hovering input using an electronic pen or the user's body part. According to an embodiment of the present disclosure, the display 160 may display a web page.

The communication interface 170, for example, may set communication between the electronic device 100 and an external device (e.g., the first external electronic device 102, the second external electronic device 104, or a server 106). For example, the communication interface 170 may be connected to a network 162 through wireless or wired communication to communicate with the external device (e.g., the second external electronic device 104 or the server 106).

The wireless communication may use at least one of, for example, long term evolution (LTE), LTE-advanced (LTE-A), code division multiple access (CDMA), wideband CDMA (WCDMA), universal mobile telecommunications system (UMTS), wireless broadband (WiBro), and global system for mobile communications (GSM), as a cellular communication protocol. In addition, the wireless communication may include, for example, short range communication 164. The short-range communication 164 may include at least one of, for example, Wi-Fi, Bluetooth, near field communication (NFC), and GPS.

The wired communication may include at least one of, for example, a universal serial bus (USB), a high definition multimedia interface (HDMI), recommended standard-232 (RS-232), and a plain old telephone service (POTS).

The network 162 may include at least one of a communication network such as a computer network (e.g., a local area network (LAN) or a wide area network (WAN)), the Internet, and a telephone network.

Each of the first and second external electronic devices 102 and 104 may be a device which is the same as or different from the electronic device 100. According to an embodiment of the present disclosure, the server 106 may include a group of one or more servers. According to various embodiments of the present disclosure, all or a part of operations performed in the electronic device 100 can be performed in the other electronic device or multiple electronic devices (for example, the first or second external electronic devices 102 or 104 or the server 106). According to an embodiment of the present disclosure, when the electronic device 100 should perform some functions or services automatically or by a request, the electronic device 100 may make a request for performing at least some functions related to the functions or services to another device (for example, the first or second external electronic devices 102 or 104, or the server 106) instead of performing the functions or services by itself or additionally. Another electronic device (e.g., the first or second external electronic devices 102 or 104, or the server 106) may perform a function requested from the electronic device 100 or an additional function and transfer the performed result to the electronic device 100. The electronic device 100 can provide the requested function or service to another electronic device by processing the received result as it is or additionally. To this end, for example, cloud computing, distributed computing, or client-server computing technology may be used.

According to various embodiments of the present disclosure, the electronic device 100 may separate the image into a plurality of areas, using at least one module that is functionally or physically separated from the processor 120, and may process the image for each area.

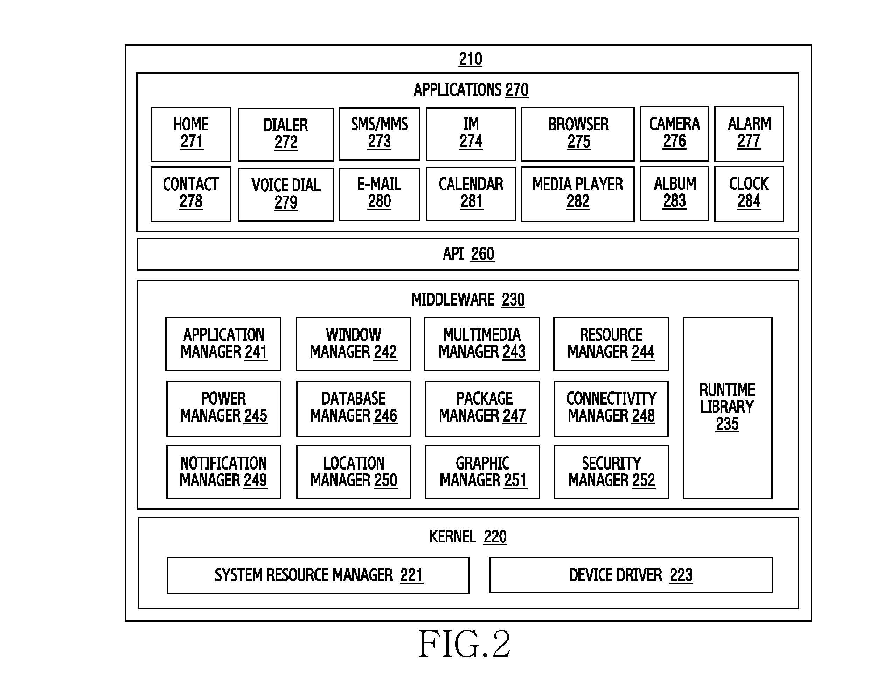

FIG. 2 is a block diagram of a program module, according to various embodiments of the present disclosure.

According to an embodiment of the present disclosure, the program module 210 (e.g., the program module 140) may include an OS for controlling resources related to the electronic device (e.g., the electronic device 100), and/or various applications (e.g., application programs 147) executed under the OS. For example, the operating system may be Android, iOS, Windows, Symbian, Tizen, Bada, or the like.

The program module 210 may include a kernel 220 (e.g., kernel 141), a middleware 230 (e.g., middleware 143), an API 260 (e.g., API 145), and/or applications 270 (e.g., applications 147). At least a partial area of the program module 210 may be preloaded in the electronic device, or may be downloaded from a server.

The kernel 220, for example, may include a system resource manager 221 or a device driver 223. The system resource manager 221 may perform the control, allocation or collection of the system resources. According to an embodiment of the present disclosure, the system resource manager 221 may include a process management unit, a memory management unit, or a file system management unit. The device driver 223 may include, for example, a display driver, a camera driver, a Bluetooth driver, a common memory driver, a USB driver, a keypad driver, a Wi-Fi driver, an audio driver, or an inter-process communication (IPC) driver.

The middleware 230, for example, may provide functions required in common for the applications 270, or may provide various functions to the applications 270 through the API 260 in order to allow the applications 270 to effectively use limited system resources in the electronic device. According to an embodiment of the present disclosure, the middleware 230 may include at least one of a runtime library 235, an application manager 241, a window manager 242, a multimedia manager 243, a resource manager 244, a power manager 245, a database manager 246, a package manager 247, a connectivity manager 248, a notification manager 249, a location manager 250, a graphic manager 251, or security manager 252.

The runtime library 235 may include a library module that, for example, a compiler uses in order to add new functions through programming language while the applications 270 are in progress. The runtime library 235 may perform functions, such as managing of an input/output, managing of a memory, or arithmetic calculation.

The application manager 241 may manage, for example, a life cycle of at least one application among the applications 270. The window manager 242 may manage a graphical user interface (GUI) resource used in a screen. The multimedia manager 243 may identify formats for reproducing various media files, and may perform encoding or decoding of media files by using a codec corresponding to each format. The resource manager 244 may manage resources such as a source code, a memory, or a storage space of at least one application among the applications 270.

The power manager 245, for example, may manage a battery or power in interwork with a basic input/output system (BIOS), and provide power information necessary for the operation thereof. The database manager 246 may manage to create, search for or change the database that is to be used in at least one of the applications 270. The package manager 247 may manage the installation or the updating of applications distributed in the form of a package file.

The connectivity manager 248 may manage a wireless connection, such as, for example, Wi-Fi or Bluetooth. The notification manager 249 may display or notify of events, such as received messages, appointments, and proximity notifications to a user without disturbance. The location manager 250 may manage location information of the electronic device. The graphic manager 251 may manage graphic effects to be provided to a user, or a user interface related thereto. The security manager 252 may provide a general security function required for system security or user authentication. According to an embodiment of the present disclosure, when the electronic device (e.g., the electronic device 100 or electronic device 1400) adopts a phone call function, the middleware 230 may further include a telephony manager for managing functions of a voice call or a video call of the electronic device.

The middleware 230 may include a middleware module through a combination of various functions of the elements set forth above. The middleware 230 may provide a module that is specialized according to the type of operating system in order to provide differentiated functions. In addition, some typical elements may be dynamically removed from the middleware 230, or new elements may be added to the middleware 230.

The API 260 may be provided as a group of API programming functions, and may be provided with a different configuration according to an operating system. For example, one set of APIs may be provided to each platform in the case of Android or iOS, and at least two sets of APIs may be provided to each platform in the case of Tizen.

The applications 270, for example, may include a home application 271, a dialer application 272, a short message service(SMS)/ multimedia message service (MMS) application 273, an instant messaging (IM) application 274, a browser application 275, a camera application 276, an alarm application 277, a contact application 278, a voice dial application 279, an e-mail application 280, a calendar application 281, a media player application 282, an album application 283, a clock application 284, a healthcare application (e.g., an application for measuring the amount of exercise or blood sugar), an environmental information providing application (e.g., an application for providing atmospheric pressure, humidity, or temperature information), or the like.

According to an embodiment of the present disclosure, the applications 270 may include an application (hereinafter, referred to as an "information-exchange-related application" for convenience of explanation) that supports the exchange of information between the electronic device (e.g., the electronic device 100 or electronic device 1400) and external electronic devices. The information-exchange-related application may include, for example, a notification relay application for relaying specific information to the external electronic device, or a device management application for managing the external electronic device.

For example, the notification relay application may include a function of transferring notification information created in other applications (e.g., the SMS/MMS application, the e-mail application, the healthcare application, or the environmental information providing application) of the electronic device to the external electronic devices. In addition, the notification relay application may receive notification information from, for example, the external electronic devices and provide the same to a user. The device management application may manage (e.g., install, delete, or update), for example, at least some functions (e.g., turning on or off the external electronic device (or some elements thereof), or adjusting the brightness (or resolution) of a display) of external electronic device that communicates with the electronic device, applications performed in the external electronic device, or services (e.g., a phone call service, or a messaging service) provided in the external electronic device.

According to an embodiment of the present disclosure, the applications 270 may include applications (e.g., a healthcare application), which are designated according to the properties (e.g., the type of electronic device is a mobile medical device) of the external electronic device. According to an embodiment of the present disclosure, the applications 270 may include applications received from external electronic devices (e.g., a server, or an electronic device). According to an embodiment of the present disclosure, the applications 270 may include a preloaded application, or a third-party application that may be downloaded from the server. The names of the elements in the program module 210, according to the embodiment illustrated, may vary with the type of operating system.

According to various embodiments of the present disclosure, at least some of the program module 210 may be implemented by software, firmware, hardware, or a combination thereof. At least some of the program module 210, for example, may be processed {e.g., implemented (executed) by the application programs). At least some of the program module 210, for example, may include a module, a program, a routine, sets of instructions, or a process in order to execute one or more functions.

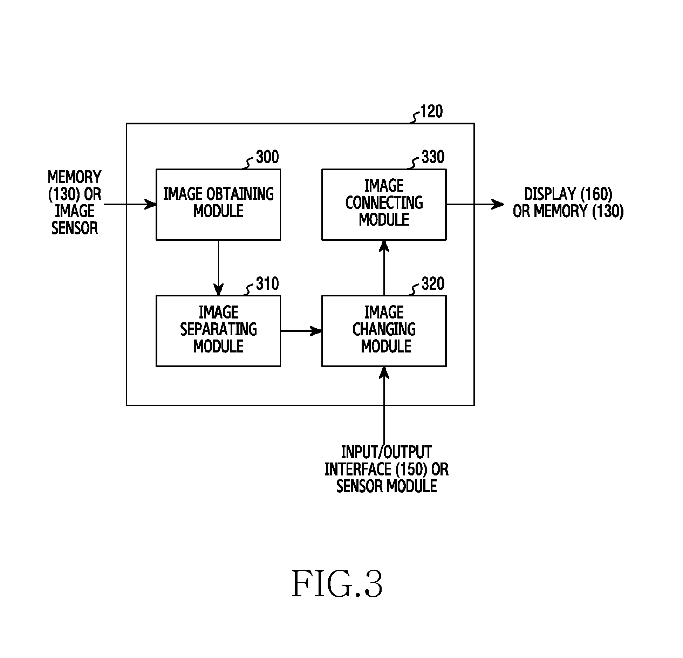

FIG. 3 is a block diagram of a processor, according to an embodiment of the present disclosure.

Referring to FIG. 3, the processor 120 may include an image obtaining module 300, an image separating module 310, an image changing module 320, and an image connecting module 330.

According to an embodiment of the present disclosure, the image obtaining module 300 may obtain at least one image. For example, the image obtaining module 300 may obtain at least one image from the image sensor (not shown) that is functionally connected to the electronic device 100. For example, the image obtaining module 300 may obtain at least one image from the memory 130. For example, the image obtaining module 300 may obtain at least one image from external devices (e.g., the first external electronic device 102, the second external electronic device 104, or the server 106) through the communication interface 170.

According to an embodiment of the present disclosure, the image obtaining module 300 may obtain a depth map corresponding to the image. For example, the image obtaining module 300 may obtain the depth map corresponding to the image collected through the sensor module (not shown) that is functionally connected to the electronic device 100. For example, the sensor module may include at least one of an infrared sensor or an ultrasonic sensor.

According to an embodiment of the present disclosure, the image separating module 310 may separate the image into a plurality of areas, by using the depth map of the corresponding image. For example, the image separating module 310 may separate one or more objects that include different depth values from the image, using the depth map corresponding to the image.

According to an embodiment of the present disclosure, the image separating module 310 may create a depth map corresponding to the image. For example, if the image obtaining module 300 cannot obtain the depth map corresponding to the image, the image separating module 310 may calculate difference values between a plurality of images obtained by the image obtaining module 300 to thereby create the depth map corresponding to the image.

According to an embodiment of the present disclosure, the image changing module 320 may apply a change effect to adjust at least one of the size or the position of at least one of the areas separated by the image separating module 310. For example, the image changing module 320 may apply a change effect to adjust at least one of the size or the position of at least one of the areas separated by the image separating module 310, based on input information detected through the input/output interface 150. For example, the image changing module 320 may apply a change effect to adjust at least one of the size or the position of at least one of the areas separated by the image separating module 310, based on user's view point information. For example, the image separating module 310 may detect the user's view point information, based on the movement of the terminal, which is detected through a sensor module (e.g., an acceleration sensor, a gyro sensor, a gravity sensor, a geomagnetic sensor) that is functionally connected with the electronic device 100. For example, the image separating module 310 may detect the user's view point information through an image sensor that is functionally connected with the electronic device 100.

According to an embodiment of the present disclosure, the image changing module 320 may apply a graphic effect to at least one of the areas separated by the image separating module 310. For example, the image changing module 320 may transform at least one of the areas separated by the image separating module 310 to correspond to the graphical effect. For example, the image changing module 320 may apply a filter to at least one of the areas separated by the image separating module 310 to correspond to the graphical effect.

According to an embodiment of the present disclosure, the image changing module 320 may apply an animation effect to at least one of the areas separated by the image separating module 310. For example, the image changing module 320 may add an image layer for the animation effect to thereby display the animation effect in at least one of the areas separated by the image separating module 310.

According to an embodiment of the present disclosure, the image connecting module 330 may connect the areas, to which the graphic effect is applied by the image changing module 320, as a single image.

According to an embodiment of the present disclosure, based on the input information detected through the input/output interface 150, the image connecting module 330 may change the positions of the areas separated by the image separating module 310, or apply another effect thereto, in order to thereby connect the areas.

According to various embodiments of the present disclosure, the electronic device (e.g., the electronic device 100 of FIG. 1) may include at least one image sensor, a memory, a communication interface a processor that obtains an image and a depth map corresponding to the image, separates the image into one or more areas based on the depth map of the image, applies an effect, which is different from at least one of other areas, to at least one of the areas separated from the image, and connects the areas, to which the different effects have been applied, as a single image and a display that displays the single image.

According to an embodiment of the present disclosure, the processor may obtain the image through at least one of the at least one image sensor, the memory, or the communication interface.

According to various embodiments of the present disclosure, the electronic device may include at least one sensor module, and the processor may collect depth map information on the image using the at least one sensor module.

According to an embodiment of the present disclosure, the sensor module may include at least one of an image sensor, an infrared sensor, or an ultrasonic sensor.

According to an embodiment of the present disclosure, the processor may determine depth map information on the image using difference values of a plurality of images, and the plurality of images may include the image and at least one of other images that are obtained by capturing the same subject as the image at a different focus.

According to an embodiment of the present disclosure, the processor may determine at least one of the position or the size to display each of the areas separated from the image based on the depth map of the image.

According to various embodiments of the present disclosure, the processor may change at least one of the position or the size of an object included in each of the areas separated from the image based on the depth map of the image and a user's view point.

According to an embodiment of the present disclosure, the processor may apply a filter corresponding to a graphic effect different from at least one of other areas to at least one of the areas separated from the image.

According to an embodiment of the present disclosure, the processor may insert an animation effect into at least a part between the areas separated from the image.

According to various embodiments of the present disclosure, the processor, in response to a change in the user's view point, may control to change at least one of the position or the size of at least a partial area of the image displayed on the display, based on the depth map of the image and the changed user's view point.

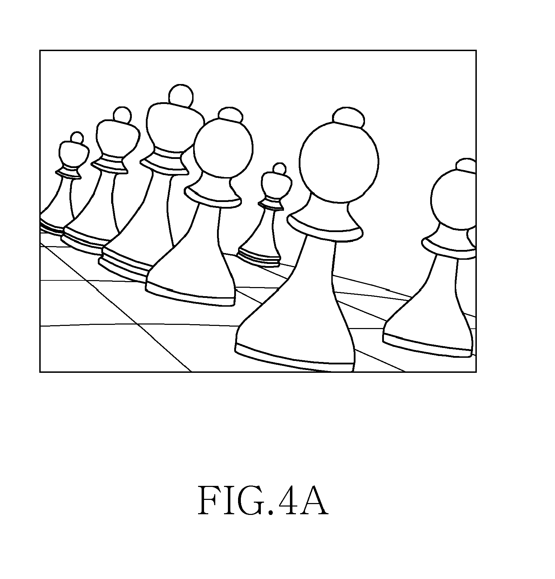

FIGS. 4A to 4E illustrate the configuration of a screen image to three-dimensionally display an object included in the image, using a depth map, according to an embodiment of the present disclosure.

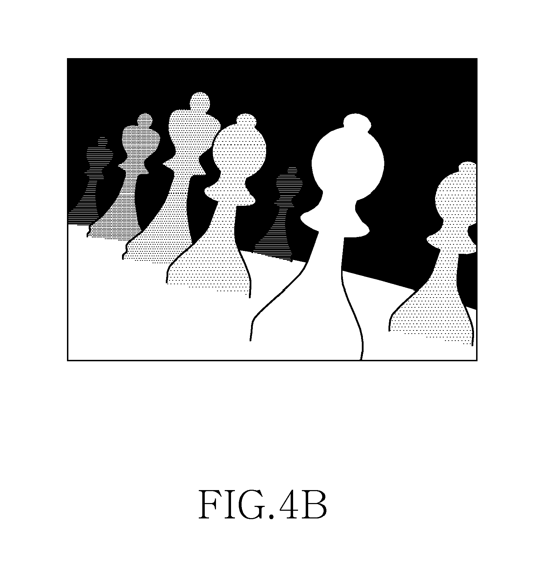

The electronic device (e.g., the electronic device 100 of FIG. 1) may obtain an image, which includes one or more objects as shown in FIG. 4A, and a depth map, which includes depth values of one or more objects included in the image as shown in FIG. 4B.

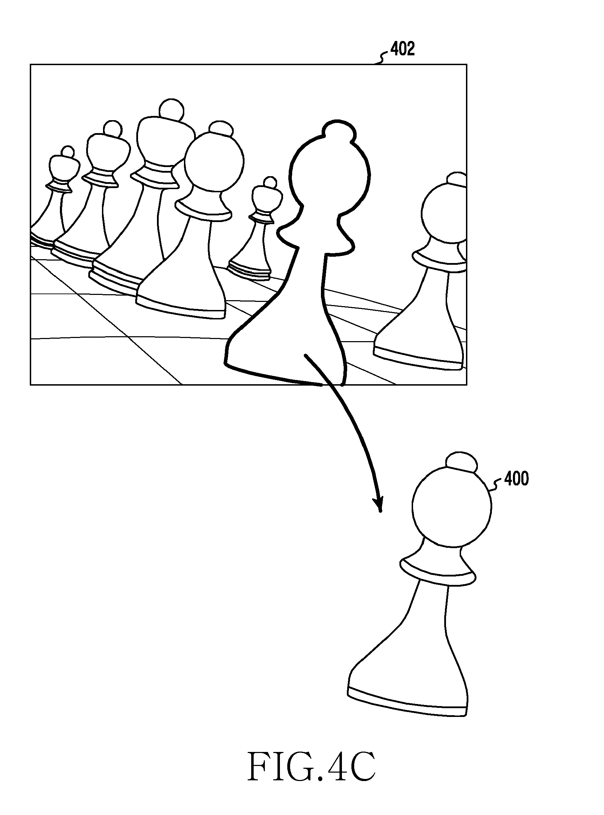

Referring to FIG. 4C, the electronic device may separate the image into a plurality of areas based on the depth map of the image. For example, the electronic device may separate the closest object 400 to the user's view point from the background image 402 based on the depth map.

The electronic device may adjust the size of the object 400 separated from the background image 402 as shown in FIG. 4C. For example, the electronic device may detect the user's view point information through a sensor module (e.g., an acceleration sensor, a gyro sensor, a gravity sensor, a geomagnetic sensor, or an image sensor) that is functionally connected with the electronic device. The electronic device may adjust the size of the object 400 separated from background image 402, based on the user's view point information.

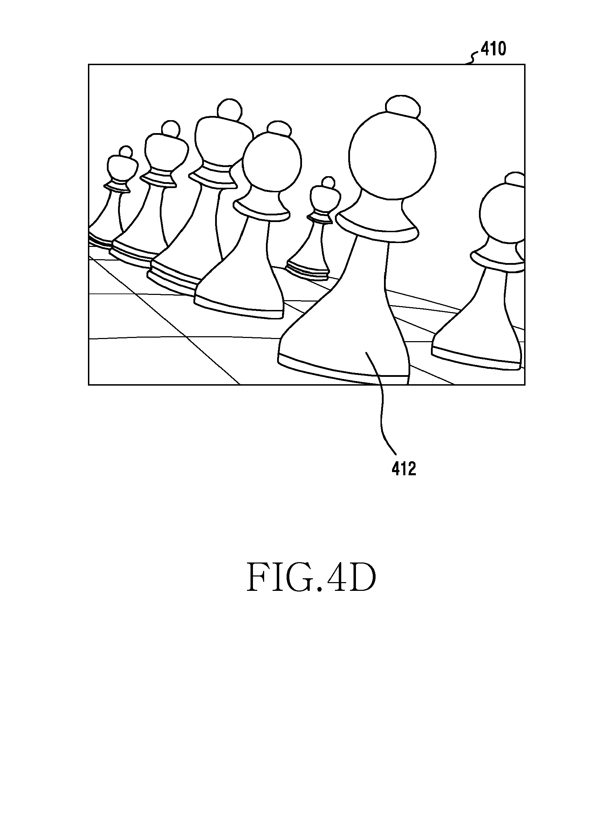

The electronic device may combine the size-adjusted object 400 with the background image as a single image in order to thereby display the same on the display 160, as shown in FIG. 4D. For example, the electronic device, based on the sensed information of the sensor module or the input information detected through the input/output interface 150, may change object's connection information (e.g., the position of the area) 412 with respect to the background image 410 to then display the same on the display 160.

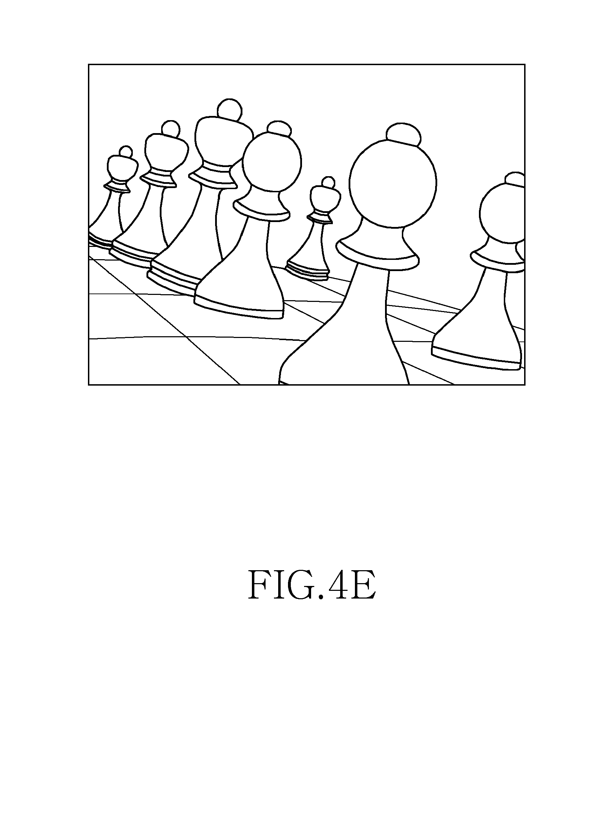

The electronic device, based on the sensed information of the sensor module or the input information detected through the input/output interface 150, may change object's connection information (e.g., the position of the area) with respect to the background image displayed on the display 160 as FIG. 4E.

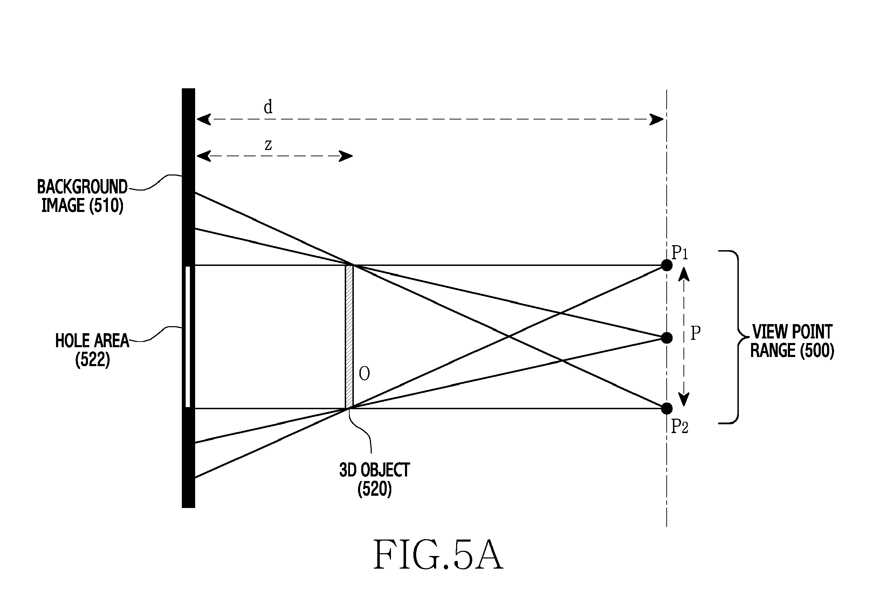

FIGS. 5A to 5E illustrate a three-dimensional (3D) disposal structure of an image, according to an embodiment of the present disclosure.

Referring to FIG. 5A, the electronic device (e.g., the electronic device 100 of FIG. 1) may three-dimensionally display the object 520 (e.g., a 3D-object) separated from the background image 510 based on the depth value (e.g., z) of the object 520. For example, the electronic device may display the background image 510 at a distance (d) from the user's view point (p), and may separate the object 520 from the background image 510 based on the depth value (z) of the object 520, to thereby display the same in three dimensions. For example, the depth value may be an objective distance value, or may be a relative distance with respect to the user's view point.

The image three-dimensionally displayed on the display 160 based on the depth value of the object 520 may naturally express a 3D effect because the user cannot recognize the hole area 522 when the user's view point varies within the view point range 500.

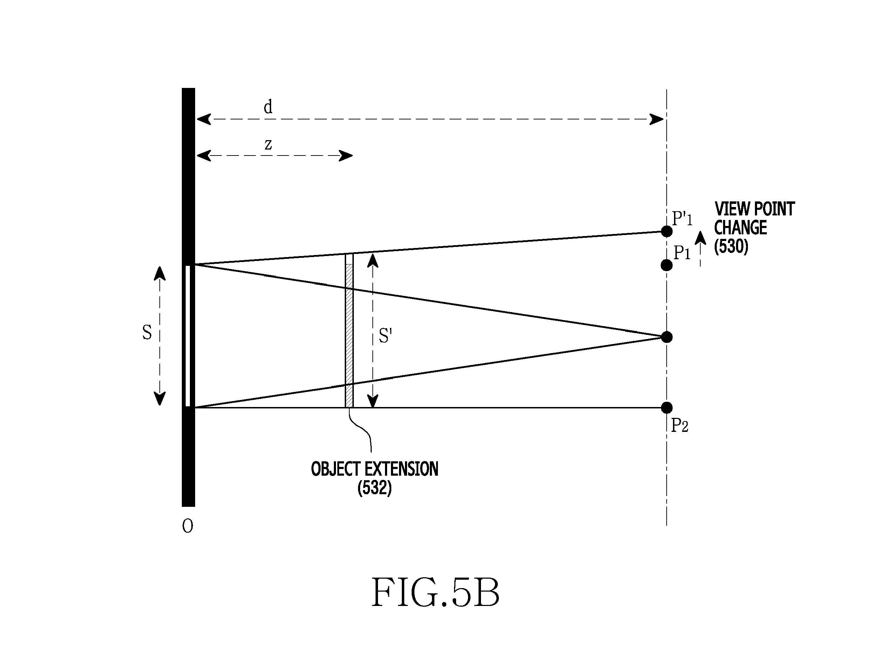

According to an embodiment of the present disclosure, when a change in the user's view point is detected (p1 → p1') as shown in FIG. 5B (see 530), the electronic device may apply a change effect to extend the size of the object 520 (e.g., the object displayed in three dimensions) (see 532) to correspond to the change of the user's view point 530, in order for the user not to recognize the hole area 522. For example, the electronic device may extend (see 532) the size of the object 520 in the direction in which the user's view point is changed (see 530).

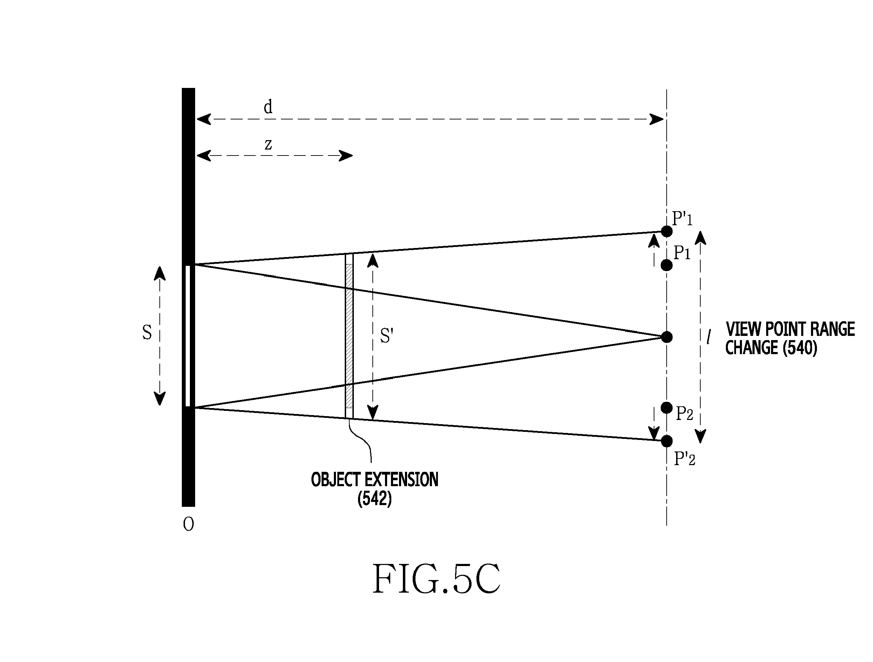

According to an embodiment of the present disclosure, when the user's view point range is extended (see 540) as shown in FIG. 5C, the electronic device may apply a change effect to extend the size of the object 520 (e.g., the object displayed in three dimensions) (see 542) to correspond to the extension of the user's view point range (see 540), in order for the user not to recognize the hole area 522. For example, the electronic device may extend 542 the overall size of the object 520 to correspond to the extension of the user's view point range (see 540) as the size of Equation 1.

$$s' = s + (l-s) \times \frac{z}{d}$$

$$\dots\text{Equation 1}$$

Here, s' denotes the size of the extended object 520, and *s* represents the size of the object 520 displayed prior to the extension. *l* denotes the extended view point range 540, and *z* denotes the depth value of the object 520. In addition, *d* may indicate the distance between the background image 510 and the user's view point (p).

The electronic device, based on Equation 1, may apply a change effect to extend the size of the object 520 (e.g., the object displayed in three dimensions) to correspond to the ratio (z/d) of the depth value of the object 520 to the distance between the background image 510 and the user's view point, and the extended size (l-s) of the view point range.

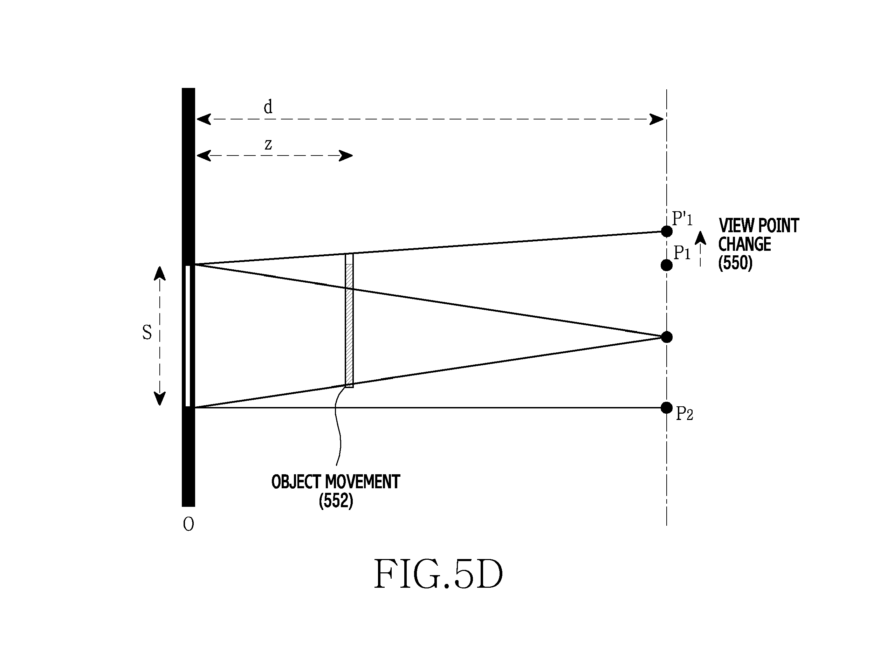

According to an embodiment of the present disclosure, when a change in the user's view point is detected (p1 → p1') as shown in FIG. 5D (see 550), the electronic device may apply a change effect to change the position of the object 520 (e.g., the position in 3D coordinates) (see 552) to correspond to the change of the user's view point (see 550), in order for the user not to recognize the hole area 522. For example, the electronic device may change (see 552) the position of the object 520 in the direction in which the user's view point is changed 550.

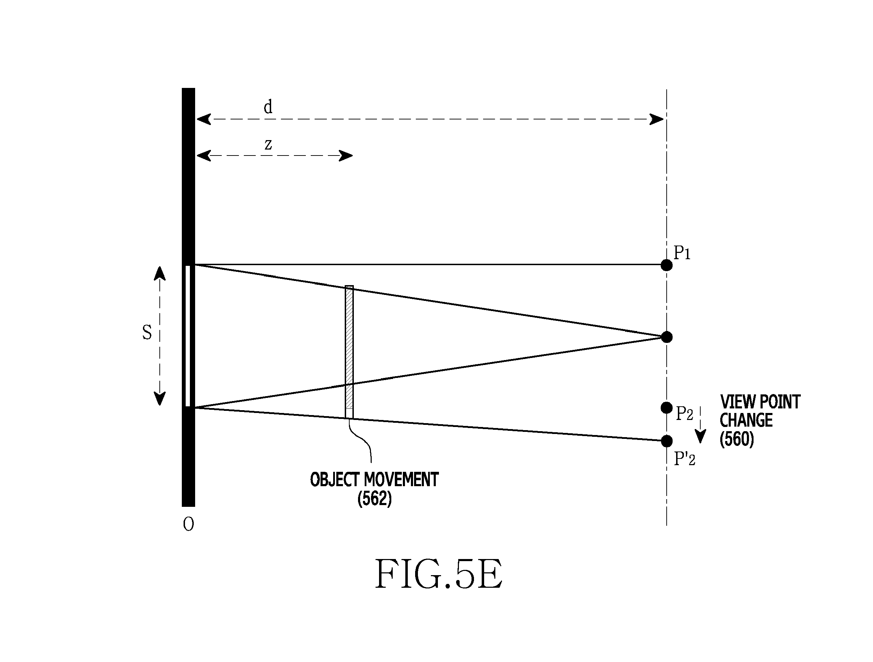

According to an embodiment of the present disclosure, when a change in the user's view point is detected (p2 -> p2') as shown in FIG. 5E (see 560), the electronic device may apply a change effect to change the position of the object 520 (see 562) to correspond to the change of the user's view point (see 560), in order for the user not to recognize the hole area 522. For example, the electronic device may change (see 562) the position of the object 520 in the direction in which the user's view point is changed (see 560).

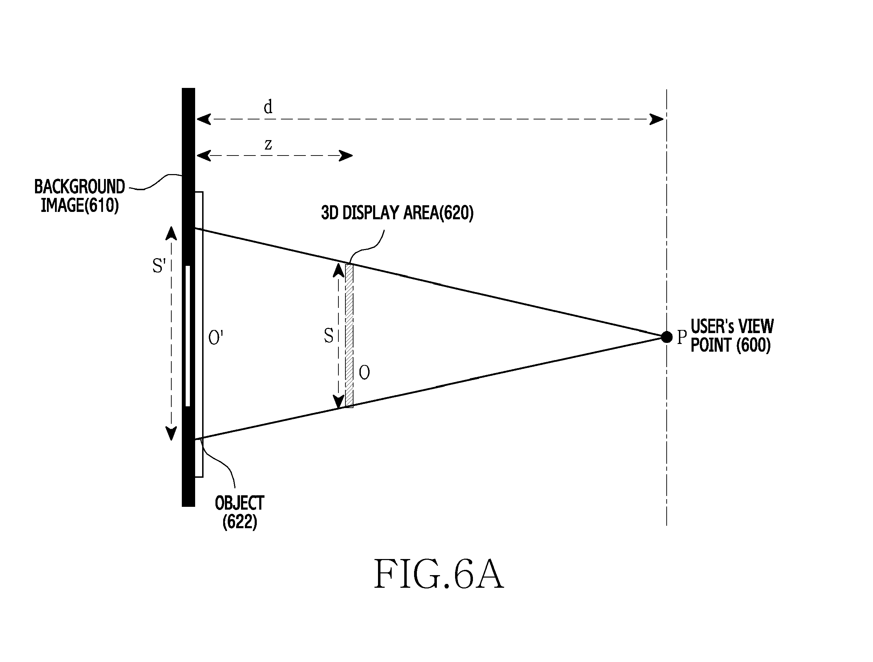

FIGS. 6A to 6E illustrate a two-dimensional disposal structure of an image, according to an embodiment of the present disclosure.

Referring to FIG. 6A, the electronic device (e.g., the electronic device 100 of FIG. 1) may adjust the size of the object 622 separated from the background image 610 based on the depth value (e.g., z) of the object 620, and may the same in three dimensions. For example, the electronic device may display the background image 610 at a distance (d) from the user's view point (p) 600, and may extend the size of the object 622 to correspond to the depth value (z) of the object 620 to then display the same to overlap the background image 610 in two dimensions. For example, the electronic device may calculate the size to be projected onto the background image at the position (o) 620 to three-dimensionally display the object 622 based on the depth value, and extend the size of the object 622 to thereby display the same to overlap the background image 610 (e.g., the position 'o') in two dimensions. For example, the electronic device may display the background image 610 in the first image layer, and may display the size-extended object 622 in the second image layer that overlaps the first image layer.

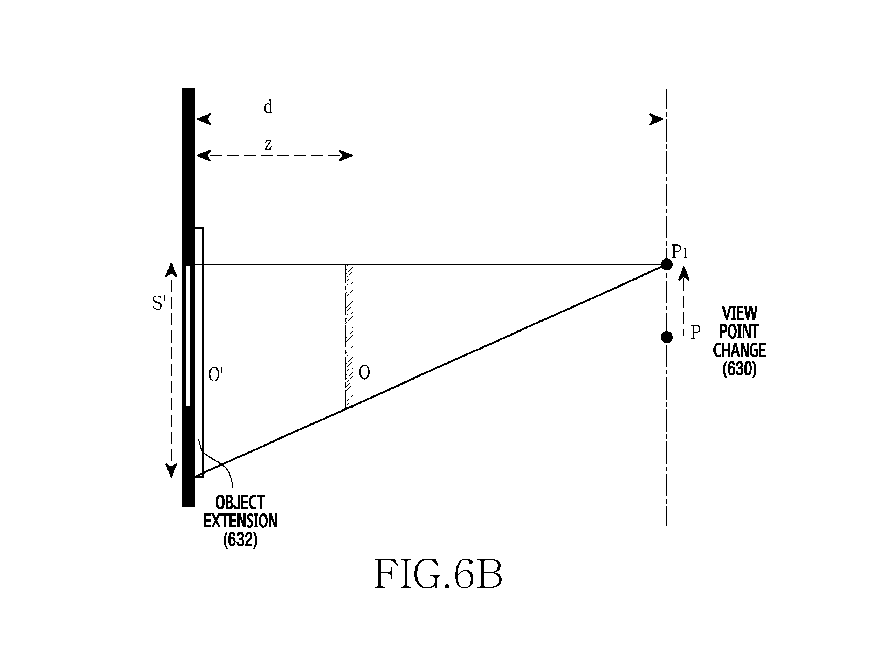

According to an embodiment of the present disclosure, when a change in the user's view point is detected (p → p1) as shown in FIG. 6B (see 630), the electronic device may apply a change effect to extend the size of the object 620 (see 632) to correspond to the change of the user's view point 630. For example, the electronic device may extend (see 632) the size of the object 622 in the direction in which the user's view point is changed (see 630).

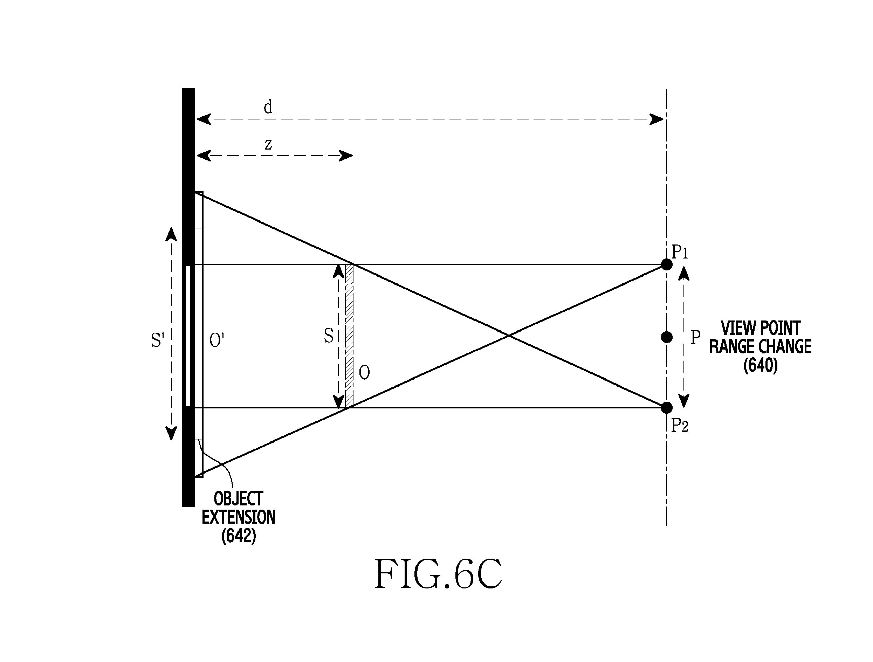

According to an embodiment of the present disclosure, when the user's view point range is extended as shown in FIG. 6C (see 640), the electronic device may apply a change effect to extend the overall size of the object 622 (see 642) to correspond to the user's extended view point range (see 640).

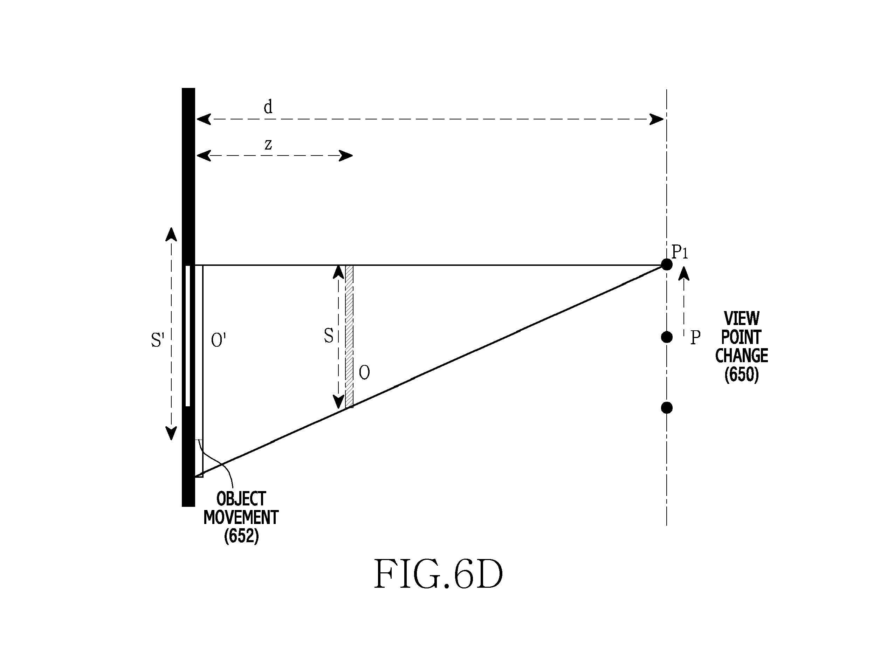

According to an embodiment of the present disclosure, when a change in the user's view point is detected (p → p1) as shown in FIG. 6D (see 650), the electronic device may apply a change effect to change the position of the object 622 (see 652) to correspond to the change of the user's view point 650. For example, the electronic device may change (see 652) the position of the object 622 in the opposite direction in which the user's view point is changed (see 650). For example, the electronic device may change the position of the object 622 while maintaining the size of the object 622. For example, the electronic device may change the position of the object 622 while changing (e.g., extending) the object 622 to correspond to the change in the user's view point.

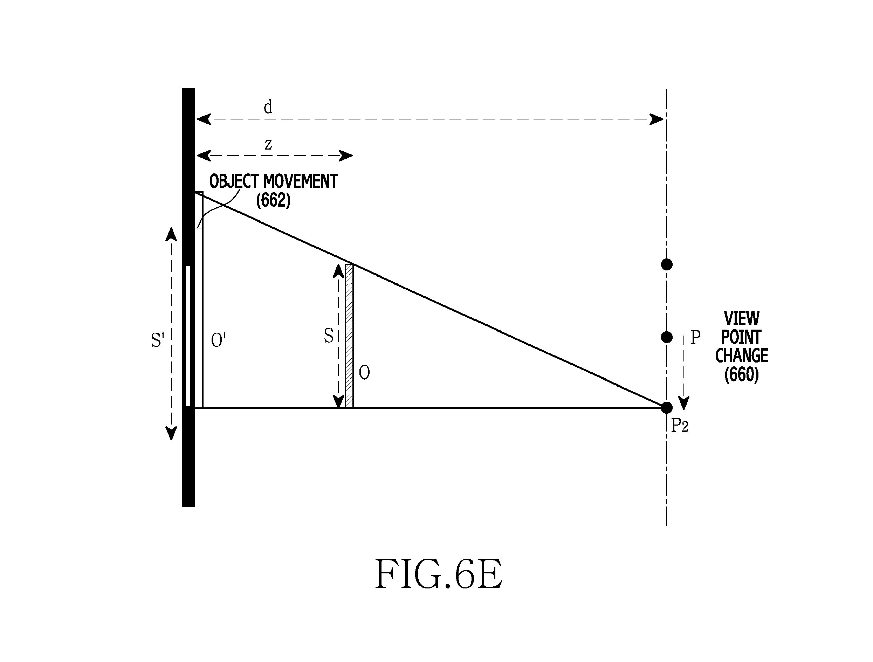

According to an embodiment of the present disclosure, when a change in the user's view point is detected (p → p2) as shown in FIG. 6E (see 660), the electronic device may apply a change effect to change the position of the object 620 (see 662) to correspond to the change of the user's view point 660. For example, the electronic device may change (see 662) the position of the object 622 in the opposite direction in which the user's view point is changed (see 660).

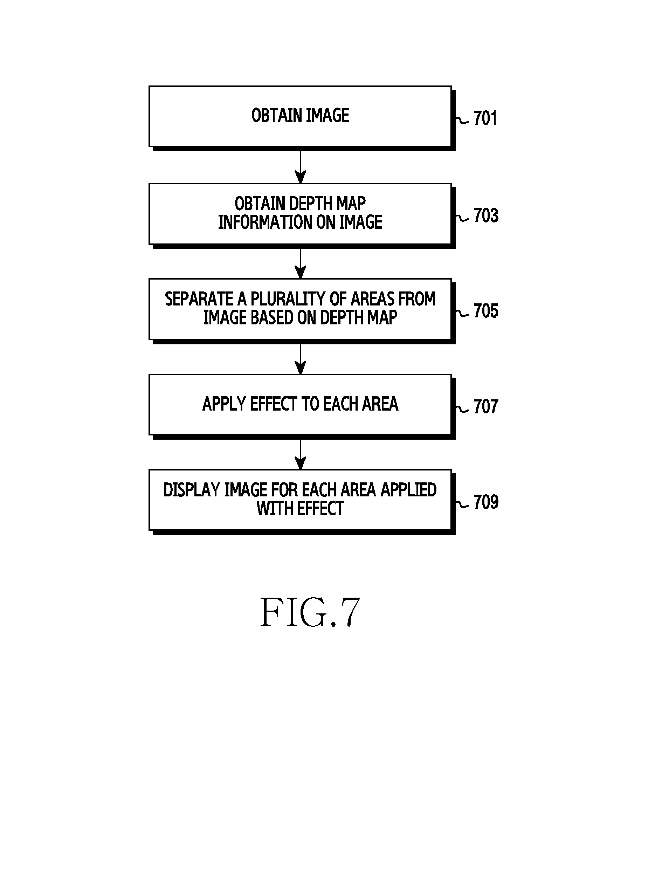

FIG. 7 is a flowchart of displaying an image in an electronic device, according to an embodiment of the present disclosure.

Referring to FIG. 7, in operation 701, the electronic device (e.g., the electronic device 100 in FIG. 1) may obtain the image. For example, the electronic device may obtain at least one image using the image sensor that is functionally connected with the electronic device. For example, the electronic device may obtain at least one image from the memory of the electronic device. For example, the electronic device may receive at least one image from the external devices (e.g., the first external electronic device 102, the second external electronic device 104, or the server 106 of FIG. 1).

In operation 703, the electronic device may obtain depth map information on the image. For example, the electronic device may obtain the depth map corresponding to the image that is collected through the sensor module (e.g., the infrared sensor, or the ultrasonic sensor) that is functionally connected with the electronic device. For example, the electronic device may create the depth map corresponding to the image by calculating difference values of a plurality of images.

In operation 705, the electronic device separates the image into a plurality of areas based on the depth map. For example, the electronic device may separate one or more objects from the image by using the depth map of the corresponding image. For example, the electronic device may separate the objects according to the depth values.

In operation 707, the electronic device may apply the effect to each area separated from the image. For example, the effect applied to each area may include at least one of a change effect, a graphic effect, or an animation effect with respect to at least a partial area of the image. For example, the change effect may refer to the effect to control at least one of the size or the position of at least a partial area of the image.

In operation 709, the electronic device may display the image for each area, to which the effect has been applied. For example, the electronic device may connect the separated areas as a single image to then display the same on the display 160. For example, the electronic device may change the positions of the separated areas to correspond to the input information detected through the input/output interface 150, or the change in the user's view point, and may connect the same as a single image.

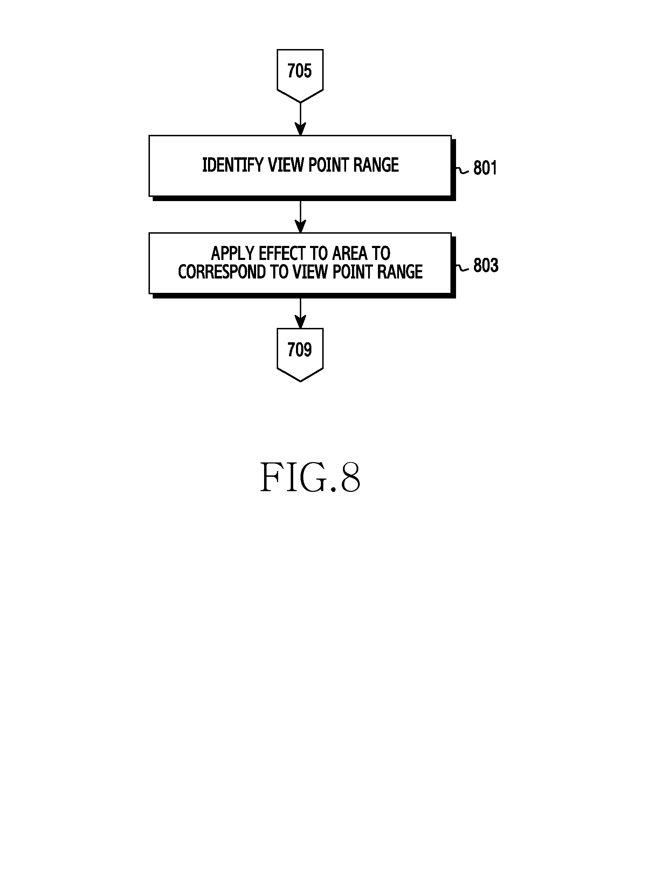

FIG. 8 is a flowchart to apply a graphic effect based on the view point range in an electronic device, according to an embodiment of the present disclosure.

Referring to FIG. 8, according to various embodiments of the present disclosure, in the case where the electronic device divides the image into a plurality of areas based on the depth map in operation 705 of FIG. 7, the electronic device may identify the user's view point in operation 801. For example, the electronic device may obtain the user's view point information based on the terminal movement detected through the sensor module (e.g., the acceleration sensor, the gyro sensor, the gravity sensor, the geomagnetic sensor) that is functionally connected with the electronic device. For example, the electronic device may detect the user's view point information through the image sensor that is functionally connected with the electronic device.

In operation 803, the electronic device may apply an effect to at least one area so as to correspond to the user's view point information. For example, if the user's view point range is changed, the electronic device may apply an effect to adjust the size of the object separated from the background image to correspond to the changed view point range. For example, if the user's view point range is changed, the electronic device may apply an effect to change the position of the object separated from the background image to correspond to the changed view point range.

The electronic device, in operation 709 of FIG. 7, may display the image for each area, to which the effect has been applied.

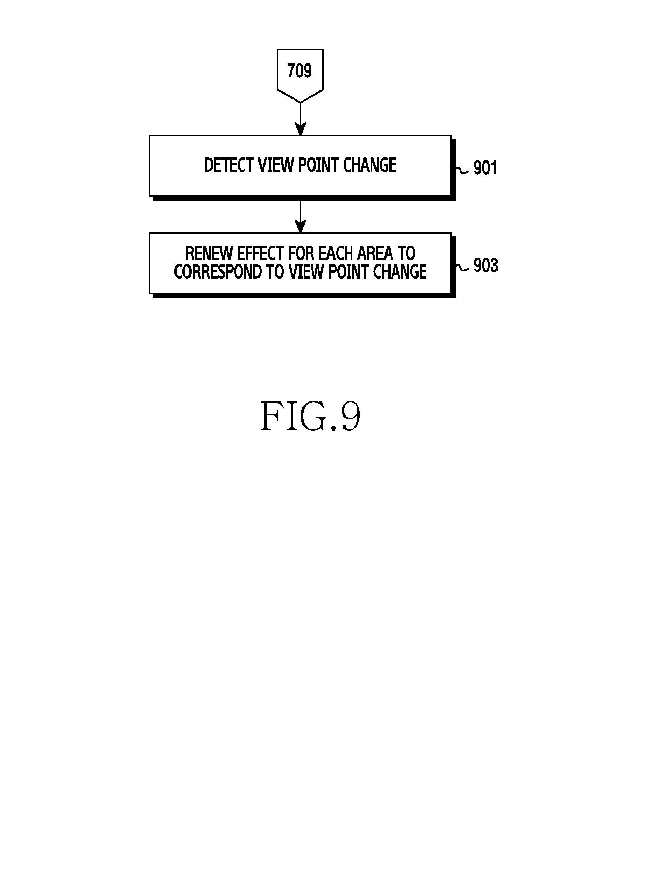

FIG. 9 is a flowchart to apply a graphic effect based on the view point change in an electronic device, according to an embodiment of the present disclosure.

Referring to FIG. 9, according to various embodiments of the present disclosure, in the case where the electronic device connects the separated areas as a single image and displays the same on the display 160 in operation 709 of FIG. 7, the electronic device may detect the user's view point change in operation 901. For example, the electronic device may identify whether or not the user's view point changes based on the movement of the terminal, which is detected through the sensor module (e.g., the acceleration sensor, the gyro sensor, the gravity sensor, or the geomagnetic sensor) that is functionally connected with the electronic device. For example, the electronic device may identify whether or not the user's view point changes through the image sensor that is functionally connected with the electronic device.

In operation 903, the electronic device may renew the effect of at least one area so as to correspond to the user's view point change. For example, the electronic device may apply an effect to control the size of the object separated from the background image to correspond to the change in the user's view point. For example, the electronic device may apply an effect to change the position of the object separated from the background image to correspond to the change in the user's view point.

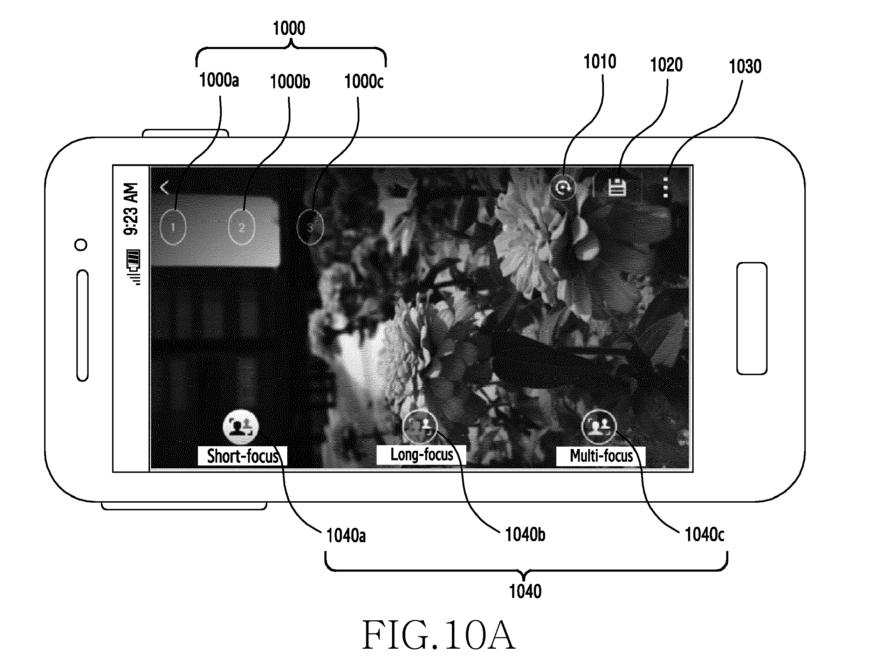

FIGS. 10A to 10D illustrate the configuration of a screen image to apply a graphic effect to at least a partial area of an image, according to an embodiment of the present disclosure.

According to an embodiment of the present disclosure, the electronic device may connect the separated areas as a single image, and may display the same on the display 160 as shown in FIG. 10A.

Referring to FIG. 10A, the image displayed on the display 160 may display, in at least a partial area thereof, a graphic effect icon 1000 that corresponds to the graphic effect, an original icon 1010 for displaying the original image, a storage icon 1020 for storing the image, a menu icon 1030 for displaying an additional menu, and focus changing icons 1040 for changing the focus of the image. For example, the focus changing icons 1040 may include a short-focus changing icon 1040a, a long-focus changing icon 1040b, and a multi-focus changing icon 1040c.

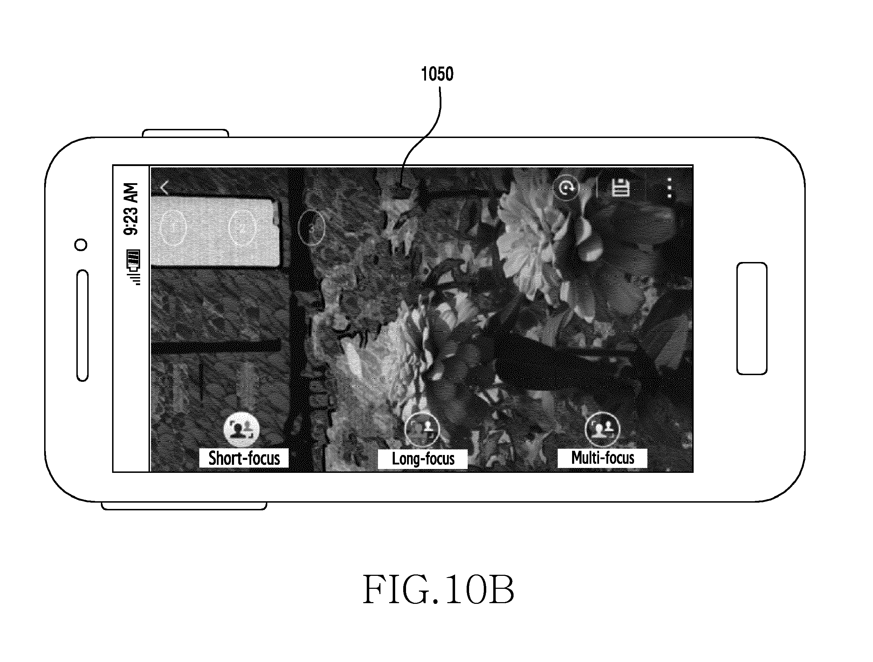

According to an embodiment of the present disclosure, when the selection of the first graphic effect icon 1000a is detected in the graphic effect icon 1000, the electronic device, as shown in FIG. 10B, may apply the first graphic effect corresponding to the first graphic effect icon 1000a to at least a partial area of the image (see 1050). For example, the electronic device may determine at least a partial area where the graphic effect is to be applied based on focus information of the image. For example, the electronic device may change the area for applying the graphic effect to correspond to the selection of the focus changing icons 1040.

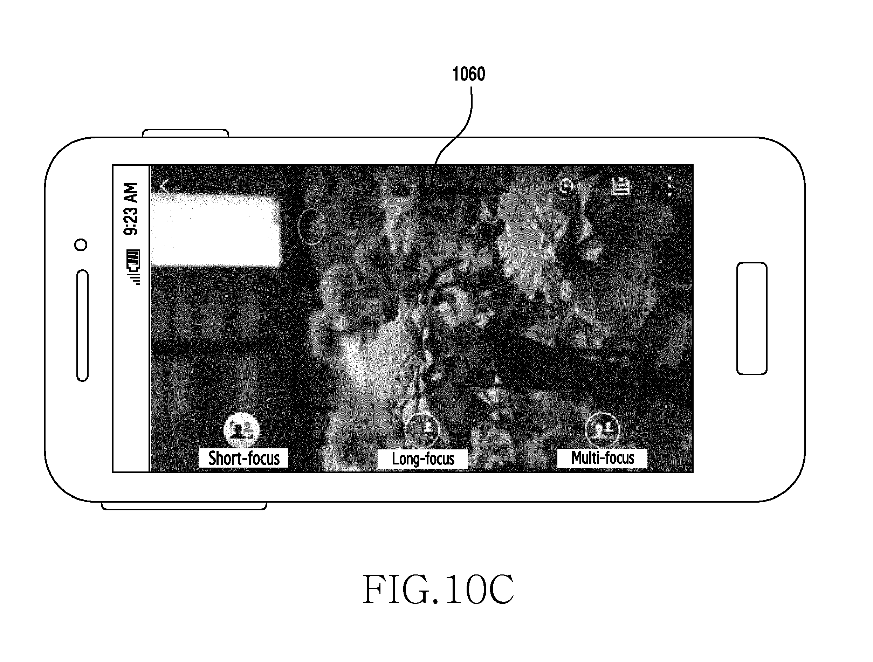

According to an embodiment of the present disclosure, when the selection of the second graphic effect icon 1000b is detected in the graphic effect icon 1000, the electronic device, as shown in FIG. 10C, may apply the second graphic effect corresponding to the second graphic effect icon 1000b to at least a partial area of the image (see 1060). For example, the electronic device may apply, to at least a partial area of the image, a different second graphic effect to correspond to the depth values of the objects included in the image.

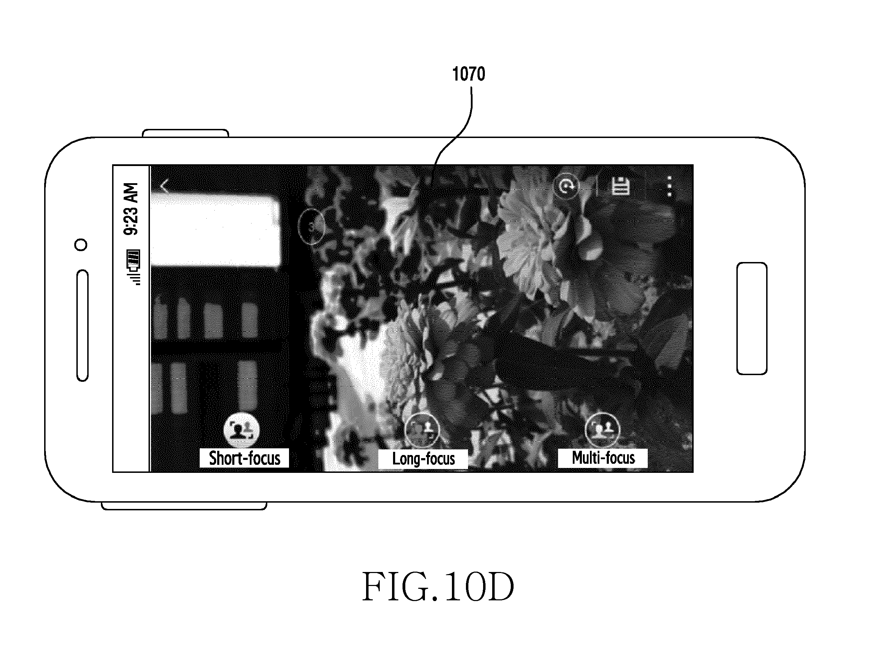

According to an embodiment of the present disclosure, when the selection of the third graphic effect icon 1000c is detected in the graphic effect icon 1000, the electronic device, as shown in FIG. 10D, may apply the third graphic effect corresponding to the third graphic effect icon 1000c to at least a partial area of the image (see 1070).

According to an embodiment of the present disclosure, when the selection of the original icon 1010 is detected in the state in which the graphic effect has been applied to at least a partial area of the image as shown in FIGS. 10B to 10D, the electronic device may display the previous image that is not applied with the graphic effect on the display 160 as shown in FIG. 10A. For example, the electronic device may display the previous image that is not applied with the graphic effect on the display 160 while the selection of the original icon 1010 is maintained.

According to an embodiment of the present disclosure, the electronic device may change the graphic effect corresponding to each of the graphic effect icons 1000a, 1000b, and 1000c based on the input information detected through the input/output interface 150.

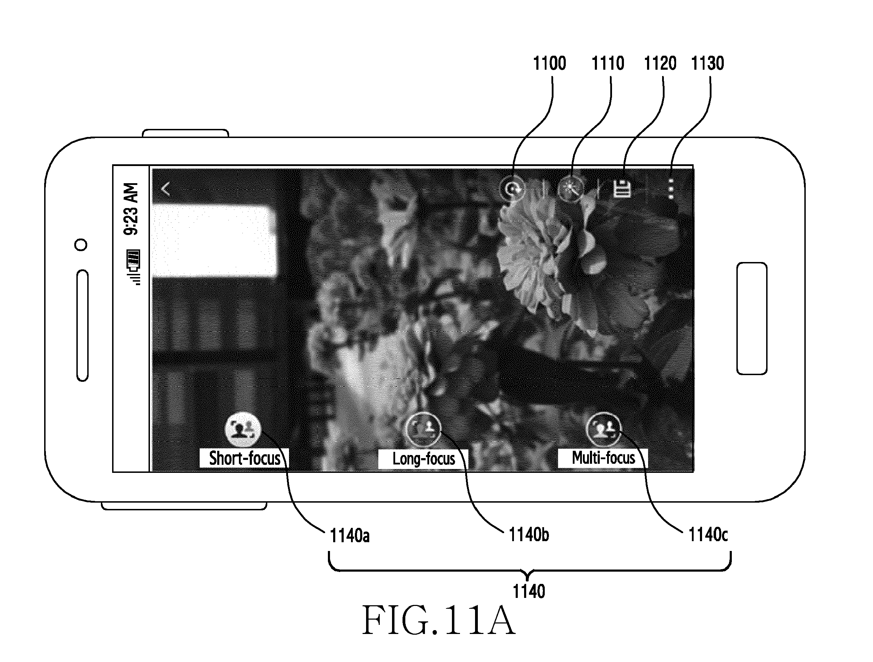

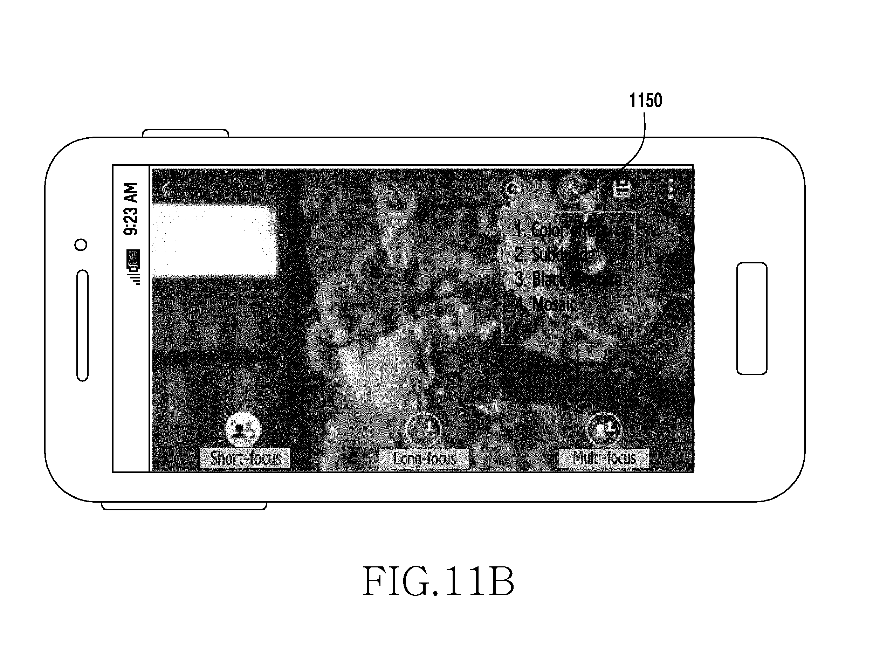

FIGS. 11A and 11B illustrate the configuration of a screen image to apply a graphic effect to at least a partial area of an image, according to an embodiment of the present disclosure.

Referring to FIG. 11A, the image displayed on the display 160 may display, in at least a partial area thereof, an original icon 1100 for displaying the original image, a graphic effect menu 1110, a storage icon 1120 for storing the image, a menu icon 1130 for displaying an additional menu, and a focus changing icon 1140 for changing the focus of the image. For example, the focus changing icons 1140 may include a short-focus changing icon 1140a, a long-focus changing icon 1140b, and a multi-focus changing icon 1140c.

According to an embodiment of the present disclosure, when the selection of the graphic effect menu 1110 is detected, the electronic device, as shown in FIG. 11B, may display a graphic effect list 1150 that can be applied to at least a partial area of the image. When the electronic device detects the selection for a specific graphic effect from the graphic effect list 1150 based on the input information (e.g., touch information) detected through the input/output interface 150, the electronic device may apply the corresponding graphic effect to at least a partial area of the image.

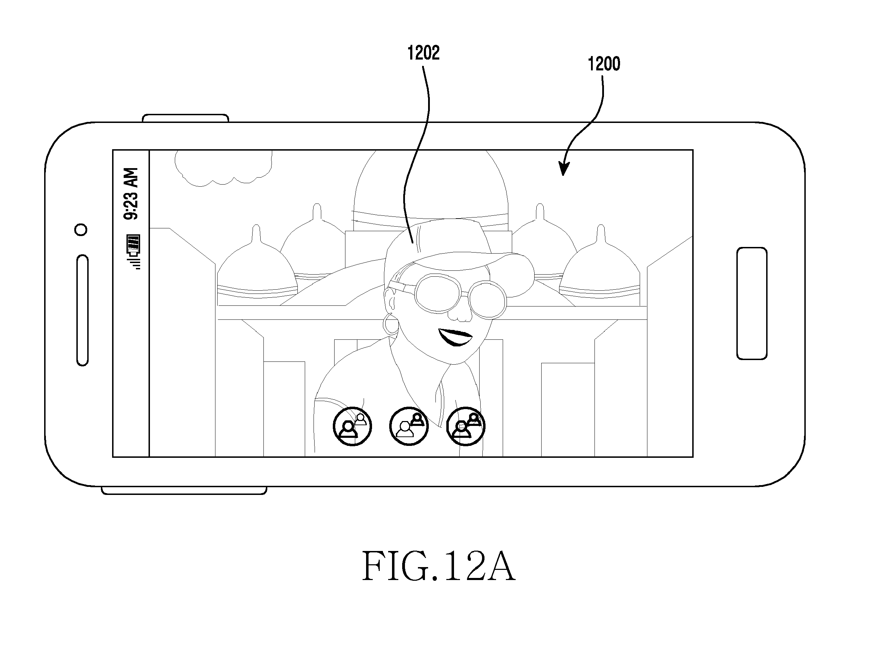

FIGS. 12A to 12C illustrate the configuration of a screen image to apply an animation effect to at least a partial area of an image, according to an embodiment of the present disclosure.

According to an embodiment of the present disclosure, the electronic device may connect the separated areas as a single image to display the same on the display 160 as shown in FIG. 12A. The electronic device may separate the closest object 1202 to the user's view point from the background image 1200 based on the depth map to then display the same on the display 160.

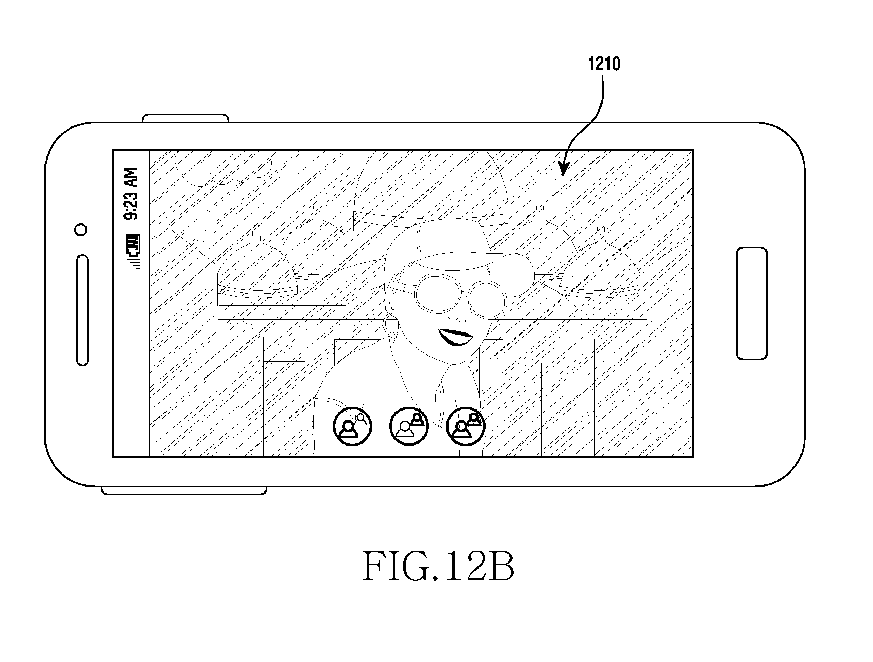

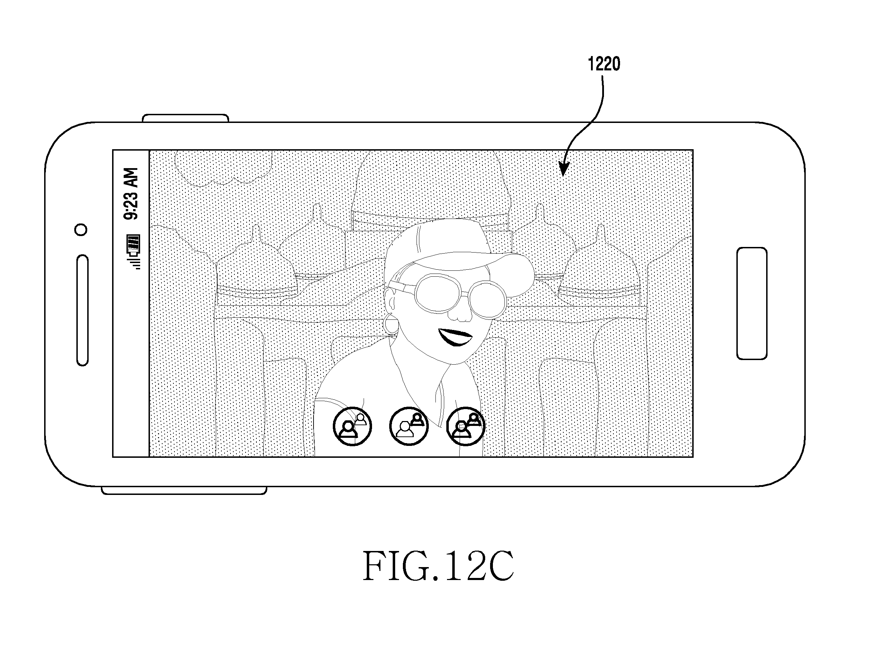

According to an embodiment of the present disclosure, the electronic device may apply the animation effect to at least a partial area of the image. For example, the electronic device may insert at least one image layer for the animation effect between the image layers that display the separated areas in order to thereby apply the animation effect to at least a partial area of the image. The electronic device may apply different animation effects to the separated areas of the image to correspond to the depth values. For example, the electronic device may apply a non-animation effect 1210 to the background image 1200 as shown in FIG. 12B. For example, the electronic device may apply a fog animation effect 1220 to the background image 1200 as shown in FIG. 12C.

According to an embodiment of the present disclosure, the electronic device may change the animation effect displayed in at least a partial area of the image based on the input information detected through the input/output interface 150. For example, if the non-animation effect 1210 is applied to the background image 1200 as shown in FIG. 12B, the electronic device may adjust the amount of precipitation so as to correspond to the input information. For example, if the fog animation effect 1220 is applied to the background image 1200 as shown in FIG. 12C, the electronic device may remove the mist display or may increase the fog density in at least a partial area of the background image 1200, where the user has touched.

In an embodiment of the present disclosure, the electronic device may change the animation effect displayed in at least a partial area of the image based on the movement of the electronic device, which is detected using the sensor module that is functionally connected with the electronic device. For example, if the non-animation effect 1210 is applied to the background image 1200 as shown in FIG. 12B, the electronic device may adjust the amount of precipitation or the angle of rain to correspond to the movement of the electronic device. For example, if the fog animation effect 1220 is applied to the background image 1200 as shown in FIG. 12C, the electronic device may change the fog density in at least a partial area of the background image 1200 to correspond to the movement of the electronic device.

The electronic device may change the animation affect displayed in at least a partial area of the image based on the input information detected through the input/output interface 150. For example, if the fog animation effect 1220 is applied to the background image 1200 as shown in FIG. 12C, the electronic device may remove the mist display or may increase the fog density in at least a partial area of the background image 1200, where the user has touched.

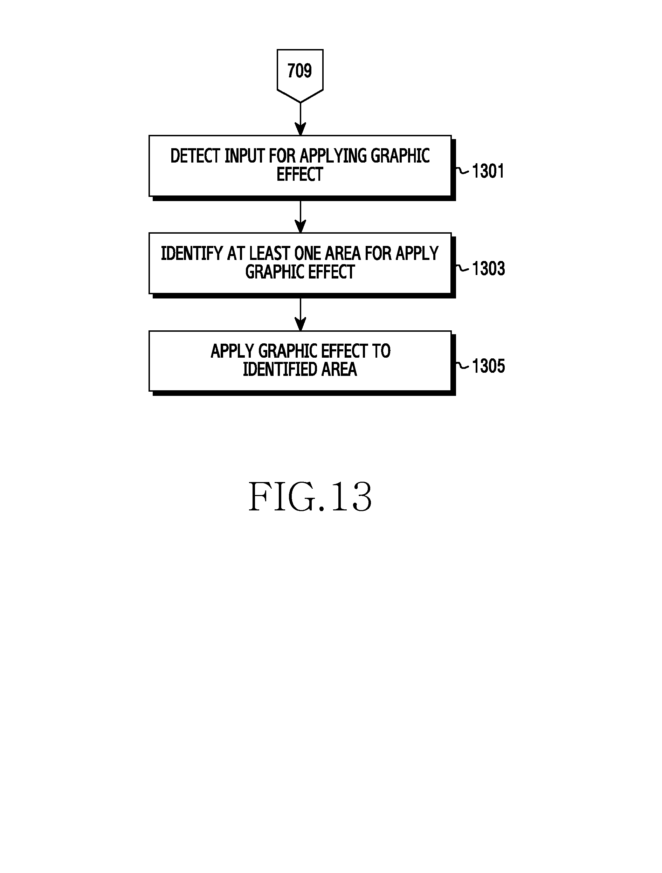

FIG. 13 is a flowchart to apply a graphic effect to at least a partial area of an image in an electronic device, according to an embodiment of the present disclosure.

Referring to FIG. 13, according to various embodiments of the present disclosure, in the case where the electronic device connects the separated areas as a single image and displays the same on the display 160 in operation 709 of FIG. 7, the electronic device may, in operation 1301, detect an input for applying the graphic effect through the input/output interface 150. For example, the electronic device may identify the graphic effect to be applied to at least a partial area of the image among the graphic effects displayed on the display 160 as shown in FIGS. 10A to 10D, or FIG. 11B, using the input information detected through the input/output interface 150.

In operation 1303, the electronic device may identify at least a partial area of the image in order to apply the graphic effect. For example, the electronic device may identify the area to be applied with the graphic effect by using the depth map information obtained in operation 703. For example, the electronic device may identify at least a partial area of the image, where the focus is not adjusted, as the area to be applied with the graphic effect. For example, the electronic device may identify the area to be applied with the graphic effect by using the input information detected through the input/output interface 150.

In operation 1305, the electronic device may apply the graphic effect to at least a partial area of the image. For example, the electronic device may change at least a partial area of the image identified in operation 1303 to correspond to the graphic effect. For example, the electronic device may apply a filter to at least a partial area of the image identified in operation 1303 to correspond to the graphic effect. For example, the electronic device may add an image layer for the animation effect between at least a partial area and the remaining areas of the image identified in operation 1303 to thereby display the animation effect in at least a partial area of the image.

According to various embodiments of the present disclosure, an operating method of the electronic device (e.g., the electronic device 100 of FIG. 1) may include obtaining an image, obtaining a depth map corresponding to the image, separating the image into one or more areas based on the depth map of the image, applying an effect, which is different from at least one of other areas, to at least one of the areas separated from the image, and displaying the areas, to which different effects have been applied, on a display.

According to an embodiment of the present disclosure, the obtaining of the image may include obtaining the image from at least one of the image sensor that is functionally connected with the electronic device, extracting the image stored in a memory of the electronic device, or receiving the image from an external device.

According to an embodiment of the present disclosure, the obtaining of the depth map may include collecting depth map information on the image using at least one sensor module.

According to an embodiment of the present disclosure, the sensor module may include at least one of an image sensor, an infrared sensor, or an ultrasonic sensor.

According to an embodiment of the present disclosure, the obtaining of the depth map may include determining depth map information on the image using difference values of a plurality of images related to the image, and the plurality of images may include the image and at least one of other images that are obtained by capturing the same subject as the image at a different focus.

According to an embodiment of the present disclosure, the applying of the different effect may include determining at least one of the position or the size to display each of the areas separated from the image based on the depth map of the image.

According to an embodiment of the present disclosure, the applying of the different effect may include changing at least one of the position or the size of an object included in each of the areas separated from the image based on the depth map of the image and a user's view point.

According to an embodiment of the present disclosure, the applying of the different effect may include applying a filter corresponding to a graphic effect different from at least one of other areas to at least one of the areas separated from the image.

According to an embodiment of the present disclosure, the applying of the different effect may include inserting an animation effect into at least some between the areas separated from the image.

According to an embodiment of the present disclosure, the applying of the different effect may include, in response to a change in the user's view point, changing at least one of the position or the size of at least a partial area of the image displayed on the display, based on the depth map of the image and the changed user's view point.

According to an embodiment of the present disclosure, the displaying of the areas on the display may include connecting the areas, to which different effects have been applied, as a single image, and displaying the single image on the display.

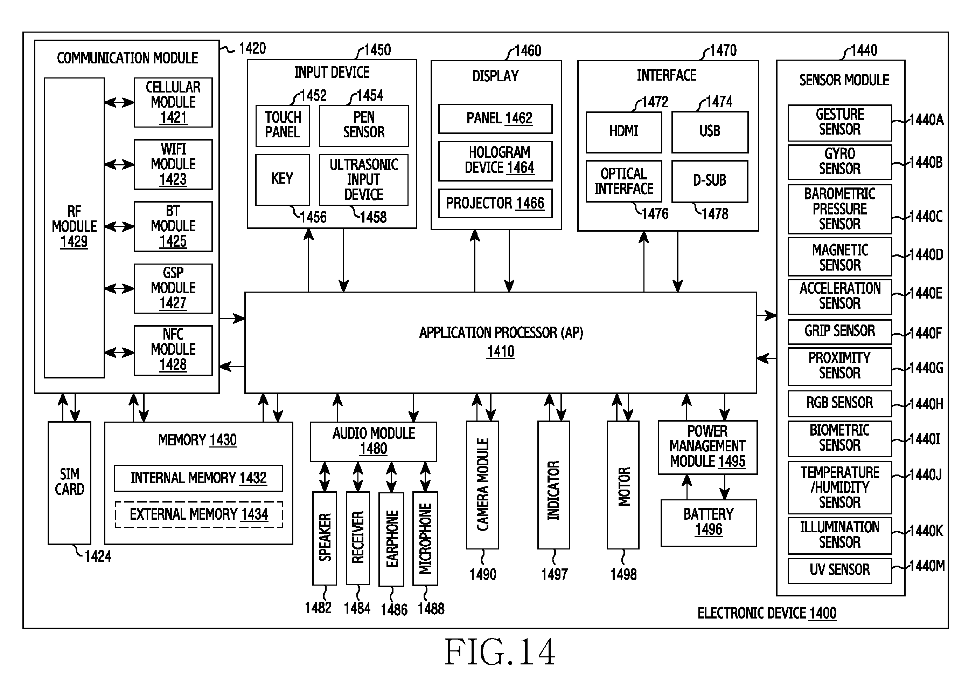

FIG. 14 is a block diagram of an electronic device, according to an embodiment of the present disclosure. In the following description, the electronic device 1400, for example, may constitute a part of or all of the electronic device 100 of FIG. 1.

Referring to FIG. 14, the electronic device 1400 may include one or more APs 1410, a communication module 1420, a subscriber identification module (SIM) card 1424, a memory 1430, a sensor module 1440, an input device 1450, a display 1460, an interface 1470, an audio module 1480, a camera module 1490, a power management module 1495, a battery 1496, an indicator 1497, and a motor 1498.

The AP 1410 may control a multitude of hardware or software elements connected with the AP 1410 and perform the processing of various pieces of data including multimedia data and the calculation, by driving an operating system or application programs. The AP 1410 may be implemented with, for example, a system on chip (SoC). According to an embodiment of the present disclosure, the AP 1410 may further include a graphics processing unit (GPU)

The communication module 1420 (e.g., the communication interface 170) may transmit or receive data in communication between the electronic device 1400 (e.g., the electronic device 100) and other electronic devices connected thereto through a network. According to an embodiment of the present disclosure, the communication module 1420 may include a cellular module 1421, a Wi-Fi module 1423, a Bluetooth module 1425, a GPS module 1427, an NFC module 1428, or a radio frequency (RF) module 1429.

The cellular module 1421 may provide services of a voice call, a video call and text messaging, or an Internet service through communication networks (e.g., LTE, LTE-A, CDMA, WCDMA, UMTS, WiBro, or GSM). In addition, the cellular module 1421 may perform identification and authentication of the electronic device in the communication network, for example, by using a SIM (e.g., the SIM card 1424). According to an embodiment of the present disclosure, the cellular module 1421 may perform at least some of the functions provided by the AP 1410. For example, the cellular module 1421 may conduct at least some of multimedia control functions.

According to an embodiment of the present disclosure, the cellular module 1421 may include a CP. In addition, the cellular module 1421 may be implemented with, for example, an SoC. Although elements, such as the cellular module 1421 (e.g., the communication processor), the memory 1430, or the power management module 1495, are illustrated to be separated from the AP 1410 in FIG. 14, according to an embodiment, the AP 1410 may be implemented to include at least some (e.g., the cellular module 1421) of the elements mentioned above.

According to an embodiment of the present disclosure, the AP 1410 or the cellular module 1421 (e.g., the communication processor) may load, in a volatile memory, instructions or data received from at least one of the non-volatile memories or other elements, which are connected with the AP 1410 or cellular module 1421, and may process the same. In addition, the AP 1410 or cellular module 1421 may store data that is received or created from or by at least one of other elements in a non-volatile memory.

Each of the Wi-Fi module 1423, the Bluetooth module 1425, the GPS module 1427, or the NFC module 1428 may include, for example, a processor for processing data transmitted and received through the corresponding module. Although the cellular module 1421, the Wi-Fi module 1423, the Bluetooth module 1425, the GPS module 1427, or the NFC module 1428 are illustrated to be separated from each other in FIG. 14, according to another embodiment, at least some (e.g., two or more) of the cellular module 1421, the Wi-Fi module 1423, the Bluetooth module 1425, the GPS module 1427, or the NFC module 1428 may be included in a single integrated circuit (IC) or in a single IC package. For example, at least some (e.g., the communication processor corresponding to the cellular module 1421 and a Wi-Fi processor corresponding to the Wi-Fi module 1423) of processors corresponding to each of the cellular module 1421, the Wi-Fi module 1423, the Bluetooth module 1425, the GPS module 1427, or the NFC module 1428 may be implemented with a single SoC.

The RF module 1429 may transmit and receive data, for example, RF signals. Although it is not shown in the drawing, the RF module 1429 may include, for example, a transceiver, a power amp module (PAM), a frequency filter, a low noise amplifier (LNA), or the like. In addition, the RF module 1429 may further include components, such as conductors or cables, for transmitting and receiving electromagnetic waves through a free space in wireless communication. Although the cellular module 1421, the Wi-Fi module 1423, the Bluetooth module 1425, the GPS module 1427 and the NFC module 1428 share a single RF module 1429 in FIG. 14, according to an embodiment of the present disclosure, at least one of the cellular module 1421, the Wi-Fi module 1423, the Bluetooth module 1425, the GPS module 1427 and the NFC module 1428 may transmit and receive RF signals through a separated RF module.

According to an embodiment of the present disclosure, the RF module 1429 may include at least one of a main antenna and a sub antenna, which are functionally connected with the electronic device 1400. The communication module 1420 may support a multiple input multiple output (MIMO) service, such as a diversity, by using the main antenna and the sub antenna.

The SIM cards 1424 may be a card adopting a SIM, and may be inserted into a slot that is formed at a specific position of the electronic device. The SIM card 1424 may include an inherent identification information (e.g., an integrated circuit card identifier (ICCID)) or subscriber information (e.g., an international mobile subscriber identity (IMSI)).

The memory 1430 may include an internal memory 1432 or an external memory 1434. The internal memory 1432, for example, may include at least one of a volatile memory (e.g., a dynamic random access memory (DRAM), a static RAM (SRAM), a synchronous dynamic RAM (SDRAM), or the like) or a non-volatile memory (e.g., an one time programmable read only memory (OTPROM), a programmable ROM (PROM), an erasable and programmable ROM (EPROM), an electrically erasable and programmable ROM (EEPROM), a mask ROM, a flash ROM, a NAND flash memory, a NOR flash memory, or the like).

According to an embodiment of the present disclosure, the internal memory 1432 may be a solid state drive (SSD). The external memory 1434 may further include a flash drive, for example, a compact flash (CF), a secure digital (SD), a micro-SD, a mini-SD, an extreme digital (xD), a memory stick, or the like. The external memory 1434 may be functionally connected with the electronic device 1400 through various interfaces. According to an embodiment of the present disclosure, the electronic device 1400 may further include a storage device (or a storage medium), such as a hard drive.

The sensor module 1440 may measure physical quantities and detect an operation state of the electronic device 1400, to thereby convert the measured or detected information to electric signals. The sensor module 1440 may include at least one of, for example, a gesture sensor 1440A, a gyro-sensor 1440B, an barometric pressure sensor 1440C, a magnetic sensor 1440D, an acceleration sensor 1440E, a grip sensor 1440F, a proximity sensor 1440G, a color sensor 1440H (e.g., a red-green-blue (RGB) sensor), a biometric sensor 1440I, a temperature/humidity sensor 1440J, an illuminanation sensor 1440K, or an ultra violet (UV) sensor 1440M. Alternatively or additionally, the sensor module 1440 may further include, for example, an E-nose sensor (not shown), an electromyography sensor (EMG) (not shown), an electroencephalogram sensor (EEG) (not shown), an electrocardiogram sensor (ECG) (not shown), an infrared (IR) sensor (not shown), an iris sensor (not shown), or a fingerprint sensor (not shown), or the like. The sensor module 1440 may further include a control circuit for controlling at least one sensor included therein.

The input device 1450 may include a touch panel 1452, a (digital) pen sensor 1454, keys 1456, or an ultrasonic input device 1458. The touch panel 1452 may detect a touch input in at least one of, for example, a capacitive type, a pressure type, an infrared type, or an ultrasonic type. In addition, the touch panel 1452 may further include a control circuit. In the case of a capacitive type, a physical contact or proximity may be detected. The touch panel 1452 may further include a tactile layer. In this case, the touch panel 1452 may provide a user with a tactile reaction.

The (digital) pen sensor 1454, for example, may be implemented in a method that is identical or similar to the reception of a user's touch input, or by using a separate recognition sheet. The keys 1456 may include, for example, physical buttons, optical keys, or a keypad. The ultrasonic input device 1458 detects acoustic waves with a microphone in the electronic device 1400 through an input means that generates ultrasonic signals to thereby identify data, and it may recognize wireless signals. According to an embodiment of the present disclosure, the electronic device 1400 may receive a user input from external devices (e.g., computers, or servers) by using the communication module 1420, which are connected with the communication module 1420.

The display 1460 (e.g., the display 160) may include a panel 1462, a hologram device 1464, or a projector 1466. The panel 1462 may be, for example, an LCD, an active-matrix OLED (AM-OLED), or the like. The panel 1462, for example, may be implemented to be flexible, transparent or wearable. The panel 1462 may be configured with the touch panel 1452 as a single module. The hologram device 1464 may display 3D images in the air by using interference of light. The projector 1466 may display images by projecting light onto a screen. The screen may be provided, for example, inside or outside the electronic device 1400. According to an embodiment of the present disclosure, the display 1460 may further include a control circuit for controlling the panel 1462, the hologram device 1464, or the projector 1466.

The interface 1470 may include, for example, an HDMI 1472, a USB 1474, an optical interface 1476, or a D-subminiature (D-sub) 1478. Additionally or alternatively, the interface 1470 may include, for example, a mobile high-definition link (MHL) interface, an SD card/multi-media card (MMC) interface, or an infrared data association (IrDA) standard interface.

The audio module 1480 may convert a sound into an electric signal, and vice versa. For example, the audio module 1480 may process voice information input or output through a speaker 1482, a receiver 1484, earphones 1486 or a microphone 1488.

The image sensor module 1491 is a device for photographing still and moving images, and, according to an embodiment of the present disclosure, the image sensor module may include at least one image sensor (e.g., a front sensor or a rear sensor), lenses (not shown), an image signal processor (ISP) (not shown), or a flash (e.g., LED or a xenon lamp) (not shown).

The power control module 1495 may manage the power of the electronic device 1400. Although it is not shown in the drawing, the power management module 1495 may include, for example, a power management IC (PMIC), a charger IC, or a battery or fuel gauge.

The PMIC may be mounted, for example, in an integrated circuit or an SoC semiconductor. The charging may be conducted in a wired type and a wireless type. The charger IC may charge a battery, and may prevent inflow of an excessive voltage or current from a charger. According to an embodiment of the present disclosure, the charger IC may include a charger IC for at least one of the wired charging type or the wireless charging type. The wireless charging type may encompass, for example, a magnetic resonance type, a magnetic induction type, or an electromagnetic wave type, and additional circuits for wireless charging, for example, coil loops, resonance circuits, rectifiers, or the like, may be provided.

The battery gauge may measure, for example, the remaining power of the battery 1496, a charging voltage and current, or temperature. The battery 1496 may store or generate electric power, and supply power to the electronic device 1400 by using the stored or generated electric power. The battery 1496 may include, for example, a rechargeable battery or a solar battery.

The indicator 1497 may display a specific state, for example, a booting state, a message state, or a charging state of the whole of or a part (e.g., the AP 1410) of the electronic device 1400. The motor 1498 may convert an electric signal to a mechanical vibration. Although it is not shown in the drawing, the electronic device 1400 may include a processing device (e.g., the GPU) for supporting mobile TV. The processing device for supporting mobile TV may process media data according to the standard such as, for example, digital multimedia broadcasting (DMB), digital video broadcasting (DVB) or media flow.

As described above, the electronic device may process the image for each separated area based on the depth map to thereby naturally and three-dimensionally display the image.

The electronic device may apply the graphic effect to at least a partial area of the image using the depth map to thereby provide various forms of images to the user.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments of the present disclosure may be combined into one entity, which may perform functions identical to those of the relevant components before the combination.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific IC (ASIC) chip, a field-programmable gate arrays (FPGAs), and a programmable-logic device for performing operations which has been known or are to be developed hereinafter.

According to various embodiments of the present disclosure, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a compact disc ROM (CD-ROM) and a DVD), magneto-optical media (e.g., a floptical disk), a hardware device (e.g., a ROM, a RAM, a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added. Further, the various embodiments disclosed in this document are only for the description and understanding of technical contents and do not limit the scope of the present disclosure. Accordingly, the scope of the present disclosure should be construed as including all modifications or various other embodiments based on the technical idea of the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1. An electronic device comprising:

   at least one image sensor;
   a memory;
   a communication interface;
   a processor configured to:

   obtain an image and a depth map corresponding to the image,
   separate the image into one or more areas based on the depth map of the image,
   apply to at least one of the areas separated from the image an effect, which is different from an effect applied to at least one other area separated from the image, and
   connect the areas, to which the different effects have been applied, as a single image; and

   a display configured to display the single image.

2. The electronic device of claim 1, wherein the processor is configured to obtain the image through at least one of the at least one image sensor, the memory, or the communication interface.

3. The electronic device of claims 1 or 2, further comprising at least one sensor module, wherein the processor is configured to collect depth map information on the image using the at least one sensor module.

4. The electronic device of claim 3, wherein the sensor module is configured to include at least one of an image sensor, an infrared sensor, or an ultrasonic sensor.

5. The electronic device of any preceding claim, wherein the processor is configured to determine depth map information on the image using difference values of a plurality of images, and the plurality of images includes the image and at least one of other images that are obtained by capturing a same subject as the image at a different focus.

6. An operating method of an electronic device, the operating method comprising:

   obtaining an image;
   obtaining a depth map corresponding to the image;
   separating the image into one or more areas based on the depth map of the image;
   applying to at least one of the areas separated from the image an effect, which is different from an effect applied to at least one other area separated from the image; and
   displaying the areas, to which different effects have been applied, on a display.

7. The method of claim 6, wherein the obtaining of the image comprises:

   obtaining the image from at least one of the image sensor that is functionally connected with the electronic device;
   extracting the image stored in a memory of the electronic device; or
   receiving the image from an external device.

8. The method of claims 6 or 7, wherein the obtaining of the depth map comprises collecting depth map information on the image using at least one sensor module.

9. The method of any of claims 6 to 8, wherein the obtaining of the depth map comprises determining depth map information on the image using difference values of a plurality of images related to the image, and the plurality of images includes the image and at least one of other images that are obtained by capturing a same subject as the image at a different focus.

10. The apparatus of any of claims 1 to 5 and the method of any of claims 6 to 9, wherein the applying of the different effect comprises determining at least one of a position or a size to display each of the areas separated from the image based on the depth map of the image.

11. The apparatus of any of claims 1 to 5 and the method of any of claims 6 to 9, wherein the applying of the different effect comprises changing at least one of a position or a size of an object included in each of the areas separated from the image based on the depth map of the image and a user's view point, in order for the user not to recognize a hole area.

12. The apparatus of any of claims 1 to 5 and the method of any of claims 6 to 9, wherein the applying of the different effect comprises applying a filter corresponding to a graphic effect different from at least one of other areas to at least one of the areas separated from the image.

13. The apparatus of any of claims 1 to 5 and the method of any of claims 6 to 9, wherein the applying of the different effect comprises inserting an animation effect into at least some between the areas separated from the image.

14. The apparatus of any of claims 1 to 5 and the method of any of claims 6 to 9, wherein the applying of the different effect comprises, in response to a change in a user's view point, changing at least one of a position or a size of at least a partial area of the image displayed on the display, based on the depth map of the image and the changed user's view point.

15. The method of any of claims 6 to 9, wherein the displaying of the areas on the display comprises:

   connecting the areas, to which different effects have been applied, as a single image; and
   displaying the single image on the display.

FIG.1

ELECTRONIC DEVICE — 100

PROCESSOR — 120

MEMORY — 130

BUS — 110

INPUT/OUTPUT INTERFACE — 150

DISPLAY — 160

COMMUNICATION INTERFACE — 170

APPLICATIONS — 147

APPLICATION PROGRAMMING INTERFACE (API) — 145

MIDDLEWARE — 143

KERNEL — 141

140

NETWORK — 162

ELECTRONIC DEVICE — 104

SERVER — 106

ELECTRONIC DEVICE — 102

164

**FIG.2**

210

**APPLICATIONS 270**

| HOME 271 | DIALER 272 | SMS/MMS 273 | IM 274 | BROWSER 275 | CAMERA 276 | ALARM 277 |
| CONTACT 278 | VOICE DIAL 279 | E-MAIL 280 | CALENDAR 281 | MEDIA PLAYER 282 | ALBUM 283 | CLOCK 284 |

**API 260**

**MIDDLEWARE 230**

| APPLICATION MANAGER 241 | WINDOW MANAGER 242 | MULTIMEDIA MANAGER 243 | RESOURCE MANAGER 244 |
| POWER MANAGER 245 | DATABASE MANAGER 246 | PACKAGE MANAGER 247 | CONNECTIVITY MANAGER 248 |
| NOTIFICATION MANAGER 249 | LOCATION MANAGER 250 | GRAPHIC MANAGER 251 | SECURITY MANAGER 252 |

RUNTIME LIBRARY 235

**KERNEL 220**

SYSTEM RESOURCE MANAGER 221

DEVICE DRIVER 223

MEMORY
(130) OR
IMAGE
SENSOR

→

**IMAGE OBTAINING MODULE** 300

↓

**IMAGE SEPARATING MODULE** 310

→

**IMAGE CHANGING MODULE** 320

↑

**IMAGE CONNECTING MODULE** 330

→

DISPLAY (160)
OR MEMORY (130)

120

INPUT/OUTPUT
INTERFACE (150) OR
SENSOR MODULE

# FIG.3

FIG.4A

FIG.4B

FIG.4C

410

412

FIG.4D

FIG.4E

EP 2 993 901 A1

FIG.5A

FIG.5B

EP 2 993 901 A1

FIG.5C

FIG.5D

FIG.5E

FIG.6A

FIG.6B

FIG.6C

VIEW POINT RANGE CHANGE (640)

OBJECT EXTENSION (642)

FIG.6D

EP 2 993 901 A1

FIG.6E

```
┌─────────────────────────────────┐
│          OBTAIN IMAGE           │──~ 701
└─────────────────────────────────┘
                 │
                 ▼
┌─────────────────────────────────┐
│        OBTAIN DEPTH MAP         │
│      INFORMATION ON IMAGE       │──~ 703
└─────────────────────────────────┘
                 │
                 ▼
┌─────────────────────────────────┐
│  SEPARATE A PLURALITY OF AREAS FROM │
│    IMAGE BASED ON DEPTH MAP     │──~ 705
└─────────────────────────────────┘
                 │
                 ▼
┌─────────────────────────────────┐
│       APPLY EFFECT TO EACH AREA │──~ 707
└─────────────────────────────────┘
                 │
                 ▼
┌─────────────────────────────────┐
│  DISPLAY IMAGE FOR EACH AREA APPLIED │
│          WITH EFFECT            │──~ 709
└─────────────────────────────────┘
```

FIG.7

705

IDENTIFY VIEW POINT RANGE    ～ 801

APPLY EFFECT TO AREA TO
CORRESPOND TO VIEW POINT RANGE    ～ 803

709

FIG.8

709

DETECT VIEW POINT CHANGE ~ 901

RENEW EFFECT FOR EACH AREA TO
CORRESPOND TO VIEW POINT CHANGE ~ 903

FIG.9

FIG.10A

EP 2 993 901 A1

FIG.10B

EP 2 993 901 A1

1060

Short-focus    Long-focus    Multi-focus

# FIG.10C

FIG.10D

FIG.11A

FIG.11B

EP 2 993 901 A1

EP 2 993 901 A1

FIG.12A

1210

FIG.12B

EP 2 993 901 A1

EP 2 993 901 A1

1220

FIG.12C

709

DETECT INPUT FOR APPLYING GRAPHIC EFFECT ~1301

IDENTIFY AT LEAST ONE AREA FOR APPLY GRAPHIC EFFECT ~1303

APPLY GRAPHIC EFFECT TO IDENTIFIED AREA ~1305

FIG.13

FIG.14

Europäisches
Patentamt

European
Patent Office

Office européen
des brevets

## EUROPEAN SEARCH REPORT

Application Number

EP 15 18 3747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/187910 A1 (RAYMOND MARK A [US] ET AL) 25 July 2013 (2013-07-25)<br>* paragraph [0016] *<br>* paragraph [0020] - paragraph [0023] *<br>* paragraph [0035] *<br>* paragraph [0045] *<br>* paragraph [0049] - paragraph [0050] *<br>* paragraph [0052] *<br>* paragraph [0054] *<br>* paragraph [0063] - paragraph [0064] *<br>----- | 1-15 | INV.<br>H04N13/02<br>H04N13/00 |
| X | EP 2 683 169 A2 (WOODMAN LABS INC [US]) 8 January 2014 (2014-01-08)<br>* paragraph [0014] - paragraph [0021] *<br>----- | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 7 January 2016 | Borcea, Veronica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 3747

This annex lists the patent family members relating to the patent documents cited in  the above-mentioned European search report.
The members are as contained in the European Patent Office EDP file on
The European Patent Office is in no way liable for these particulars which are merely given for the purpose of information.

07-01-2016

| Patent document cited in search report | | Publication date | Patent family member(s) | | Publication date |
|---|---|---|---|---|---|
| US 2013187910 | A1 | 25-07-2013 | CA | 2861868 A1 | 01-08-2013 |
| | | | EP | 2807827 A1 | 03-12-2014 |
| | | | US | 2013187910 A1 | 25-07-2013 |
| | | | WO | 2013112796 A1 | 01-08-2013 |
| EP 2683169 | A2 | 08-01-2014 | EP | 2683169 A2 | 08-01-2014 |
| | | | JP | 2014014076 A | 23-01-2014 |
| | | | KR | 20140004592 A | 13-01-2014 |
| | | | US | 2014009585 A1 | 09-01-2014 |

EPO FORM P0459

For more details about this annex : see Official Journal of the European Patent Office, No. 12/82